# EUROPEAN PATENT SPECIFICATION

(11) **EP 3 705 859 B1**
(45) Date of publication and mention of the grant of the patent: **23.06.2021**
(21) Application number: 19161378.5
(22) Date of filing: 07.03.2019
(51) Int. Cl.: G01J 5/02, G01J 5/08, G01J 5/20

(54) **TEMPERATURE SENSING DEVICE AND BOLOMETER DEVICE**
TEMPERATURMESSVORRICHTUNG UND BOLOMETERVORRICHTUNG
DISPOSITIF DE DÉTECTION DE TEMPÉRATURE ET DISPOSITIF BOLOMÈTRE

(43) Date of publication of application: 09.09.2020
(73) Proprietor: Infineon Technologies AG, 85579 Neubiberg (DE)
(72) Inventor: KRAVCHENKO, Andrey, 01069 Dresden (DE); KOMENKO, Vladislav, 01097 Dresden (DE); KAUTZSCH, Thoralf, 01309 Dresden (DE); FROEHLICH, Heiko, 01445 Radebeul (DE); FEICK, Henning, 01099 Dresden (DE); NIEMEIER, Dennis, 01097 Dresden (DE)
(74) Representative: Hersina, Günter

(56) References cited:
- EP-A1- 2 172 754
- US-A1- 2002 190 210
- US-A1- 2009 321 641

## Description

### Technical field

Embodiments relate to a temperature sensitive device and a bolometer device comprising such a temperature sensing device. In particular, embodiments relate to SON-based bolometers for gas sensor and IR or NIR spectrometer applications (IR = infrared, NIR = near infrared) and to an integration of a bipolar junction transistor and/or a junction field effect transistor on a SON membrane as a sensing element for radiation, e.g. IR, detection applications.

### Background

The detection of environmental parameters in the ambient atmosphere is becoming increasingly important in the implementation of appropriate sensors within mobile devices, for example, but also in the application in home automation, such as smart home, and, for example, in the automotive sector. However, with the evermore extensive use of sensors, there is also a particular need to be able to produce such sensors as inexpensively as possible and thus cost-effectively, but nevertheless the resulting reliability and accuracy of the sensors should be maintained or even increased.

Temperature sensors may be used, for example, with the following applications, e.g. as bolometer, IR camera, IR spectroscopy, gas sensing, etc. A bolometer is a device for measuring the power of incident electromagnetic radiation via the heating of a material with a temperature dependent electrical resistance. In current applications, integrated bolometers typically rely on the ability of silicon to change their electrical conductivity based on the temperature variations as a result of the incident electromagnetic radiation. As opposed to resistive sensors, an alternative sensing mechanism that may be used exploits the diode temperature dependency. However, since diodes require a single crystal to be formed, the manufacturing processing is relatively complex and requires either SOI substrates or bulk micromachining.

US 2002/190210 A1 relates to an infrared detector having a semiconductor substrate, a single crystal silicon thin film arranged and held in a hollow state at a predetermined distance above the semiconductor substrate, a plurality of thermoelectric changing means which are embedded in the single crystal silicon thin film and able to change heat energy generated by an infrared ray irradiated to the single crystal silicon thin film to an electric signal, a first connecting layer which are embedded in the single crystal silicon thin film and electrically connecting the plurality of thermoelectric changing means to each other and a second connecting layer for transmitting the electric signal outputted from the thermoelectric changing means to wire formed in the semiconductor substrate. In the infrared detector, at least one of the first and second connecting layers is constructed by a silicon compound.

US 2009/321641 A1 relates to a BJT (bipolar junction transistor)-based uncooled IR sensor and a manufacturing method thereof. The BJT-based uncooled IR sensor includes a substrate, at least one BJT which is formed to be floated apart from the substrate, and a heat absorption layer which is formed on an upper surface of the at least one BJT. The BJT changes an output value according heat absorbed through the heat absorption layer.

EP 2 172 754 A1 relates to an infrared sensor. The infrared sensor comprises a temperature sensor at a top side of a substrate and an infrared filter element located at a bottom side of the substrate. A lead frame is placed above the substrate, wherein a housing is cast having a window extending to the filter element. A recess in the lead frame provides a large distance between the temperature sensor and the metal of the lead frame.

Generally, there is a need in the art for an approach to implement improved temperature sensing devices, e.g. for bolometer applications, having reduced fabrication requirements and providing an adequate sensitivity to temperature changes of the sensor device, for example.

Such a need can be solved by the temperature sensing device according to independent claim 1 and the bolometer device according to claim 14.

Further, specific implementations of the temperature sensing device and/or bolometer device are defined in the dependent claims.

### Summary

An embodiment provides a temperature sensing device, comprising: a SON substrate (SON = silicon on nothing) having a SON cavity in a semiconductor material, wherein a SON membrane element is formed between a main surface region of the SON substrate and the SON cavity and is laterally bordered by a trench structure, a capping structure for covering the SON membrane element and for mechanically holding the SON membrane element into position with respect to the SON substrate, and a transistor structure integrated in the semiconductor material of the SON membrane element, the transistor structure having a first transistor region and a second transistor region both having a first doping type, and a third transistor region having a complimentary, second doping type, wherein the transistor structure is configured to provide during an operational condition a transistor output signal based on a temperature dependent, electrical parameter of the transistor structure, wherein a momentary temperature of the semiconductor material of the SON membrane element is derivable from the transistor output signal.

A further embodiment provides a bolometer device comprising: the above temperature sensing device, and an evaluation circuit for deriving information on the momentary temperature of the semiconductor material of the SON membrane elements from the transistor output signal.

Embodiments relate to a temperature sensing device (= bolometer pixel) based on SON processing (SON = silicon on nothing), wherein a SON membrane element with a (e.g. single) sensing element in form of the transistor structure is suspended for thermal and/or electrical insulation in a cavity, e.g. a low pressure or vacuum cavity. In form of a stand-alone device, the temperature sensing device can be used as a temperature sensor in a gas measurement setup. An array of devices with deposited filter stacks and lenses, for example, can be used as a miniaturized IR spectrometer. In both cases, the transistor structure integrated in the semiconductor material of the SON membrane element is the sensing device for sensing the temperature change of the semiconductor material of the SON membrane element.

The proposed device can be operated as a high resolution temperature sensor device or sensor pixel in a bolometer, IR camera, IR spectroscopy and/or gas sensing application.

### Brief description of the figures

Embodiments of the present temperature sensing device and bolometer device are described herein making reference to the appended drawings and figures.
- Fig. 1a: shows a schematic cross-sectional view of a temperature sensing device with a SON membrane element having a transistor structure in form of a bi-polar junction transistor (BJT) according to an embodiment;
- Fig. 1b: shows a schematic cross-sectional view of a temperature sensing device with a SON membrane element having a transistor structure in form of a junction field effect transistor (JFET) according to an embodiment;
- Fig. 1c: shows a schematic cross-sectional view of a temperature sensing device having a plurality of serial connected transistor structures having a diode configuration according to an embodiment;
- Fig. 1d: shows a schematic cross-sectional view of a temperature sensing device having an optical filter structure according to an embodiment;
- Fig. 1e: shows a schematic cross-sectional view of an array of temperature sensing devices having an optical filter structure according to an embodiment;
- Fig. 1f: shows a schematic view of a bolometer device 200 according to an embodiment;
- Fig. 2a: shows a schematic cross-sectional view of a temperature sensing device having a pnp BJT according to an embodiment;
- Fig. 2b: shows a schematic cross-sectional view of a temperature sensing device having an npn BJT together with an illustration of exemplary doping profiles through different regions of the npn BJT according to an embodiment;
- Fig. 2c: shows a schematic cross-sectional view of a temperature sensing device in form of an npn BJT having a substrate contact (collector contact) according to an embodiment;
- Fig. 2d: shows a schematic cross-sectional view of a temperature sensing device having an JFET together with an illustration of exemplary doping profiles through different regions of the JFET according to an embodiment;
- Fig. 2e-g: show a schematic cross-sectional view of a temperature sensing device having a pnp BJT in a CE (CE = common emitter) amplifier configuration together with an equivalent circuit diagram thereof according to an embodiment;
- Fig. 2h-j: show a schematic cross-sectional view of a temperature sensing device having a JFET in a CS (CS = common source) amplifier configuration together with an equivalent circuit diagram thereof according to an embodiment;
- Fig. 3a: shows a schematic plane view of a temperature sensing device with a SON BJT having a silicon cantilever suspension according to an embodiment;
- Figs. 3b-c: show partial 3D cross-sectional views (with different section planes) of the temperature sensing device with a SON BJT having a silicon cantilever suspension according to an embodiment;
- Figs. 4a-o: show schematic cross-sectional views ("schematic snapshots") of a SON substrate and the manufacturing of a temperature sensing device at different stages of a method for manufacturing the temperature sensing device with a SON BJT having a silicon cantilever suspension according to an embodiment;
- Figs. 5a-b: show 3D cross-sectional views of a temperature sensing device with a SON BJT having an insulator (e.g. oxide) cantilever suspension according to an embodiment;
- Figs. 6a-o: show schematic cross-sectional views ("schematic snapshots") of a SON substrate and the manufacturing of a temperature sensing device at different stages of the method for manufacturing the temperature sensing device with a SON BJT having an insulator (oxide) cantilever suspension according to an embodiment;
- Fig. 7a: shows a schematic top 3D plane view of a temperature sensing device with a JFET having a silicon cantilever suspension according to an embodiment;
- Figs. 7b-c: show schematic 3D cross-sectional views of the temperature sensing device with the JFET having a silicon cantilever suspension according to an embodiment;
- Figs. 8a-c: show different 3D views of a folded JFET according to an embodiment;
- Figs. 9a-b: show a schematic 3D cross-sectional view (partial view) of a temperature sensing device with a JFET having an insulator (oxide) cantilever suspension according to an embodiment.

Before discussing the present embodiments in further detail using the drawings, it is pointed out that in the figures and the specification identical elements and elements having the same functionality and/or the same technical or physical effect are usually provided with the same reference numbers or are identified with the same name, so that the description of these elements and of the functionality thereof as illustrated in the different embodiments are mutually exchangeable or may be applied to one another in the different embodiments.

### Detailed Description of Illustrative Embodiments

In the following description, embodiments are discussed in detail, however, it should be appreciated that the embodiments provide many applicable concepts that can be embodied in a wide variety of semiconductor devices. The specific embodiments discussed are merely illustrative of specific ways to make and use the present concept, and do not limit the scope of the embodiments. In the following description of embodiments, the same or similar elements having the same function have associated therewith the same reference signs or the same name, and a description of such elements will not be repeated for every embodiment. Moreover, features of the different embodiments described hereinafter may be combined with each other, unless specifically noted otherwise.

It is understood that when an element is referred to as being "connected" or "coupled" to another element, it may be directly connected or coupled to the other element, or intermediate elements may be present. Conversely, when an element is referred to as being "directly" connected to another element, "connected" or "coupled," there are no intermediate elements. Other terms used to describe the relationship between elements should be construed in a similar fashion (e.g., "between" versus "directly between", "adjacent" versus "directly adjacent", and "on" versus "directly on", etc.).

For facilitating the description of the different embodiments, the figures comprise a Cartesian coordinate system x, y, z, wherein the x-y-plane corresponds, i.e. is parallel, to the first main surface region of the SON substrate, and wherein the depth direction (vertical to the first main surface region) into the SON substrate corresponds to the "-z" direction, i.e. is parallel to the z direction.

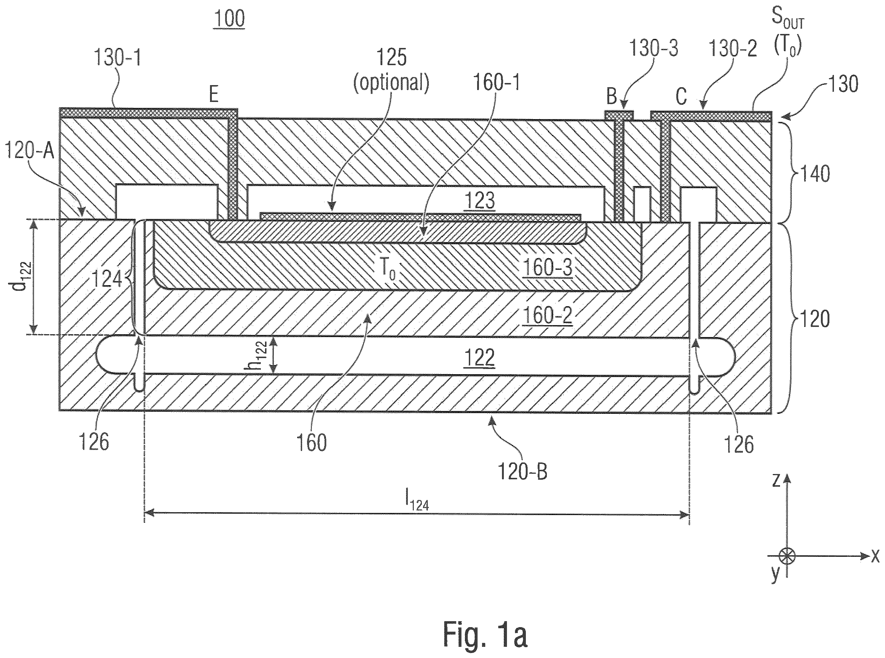

Fig. 1a shows a schematic cross-sectional view of a temperature sensing device 100 according to an embodiment.

As shown in Fig. 1a, the temperature sensing device 100, which may, for example, form a bolometer pixel, comprises a SON substrate 120 (SON = silicon on nothing) having a SON cavity 122 in a semiconductor material, wherein a SON membrane element 124 is formed between a main surface region 120-A of the SON substrate 120 and the SON cavity 122 and is laterally bordered by a trench structure 126. The temperature sensing device 100 further comprises a capping (or lid) structure 140 for covering the SON membrane element 124 and for mechanically holding the SON membrane element 124 into position with respect to the SON substrate 120. The temperature sensing device 100 further comprises a transistor structure 160 integrated in the semiconductor material of the SON membrane element 124. The transistor structure 160 has a first transistor region 160-1, e.g. a first terminal, and a second transistor region 160-2, e.g. a second terminal, both having a first doping type, and has a third transistor region 160-3, e.g. a control region, having a complementary, second doping type.

As schematically shown in Fig. 1a, the transistor structure may comprise a bipolar transistor, e.g. a npn-bipolar junction transistor (BJT), wherein the first doping type is the n-type and the second doping type is the p-type, or a pnp-bipolar junction transistor (BJT), wherein the first doping type is the p-type and the second doping type is the n-type.

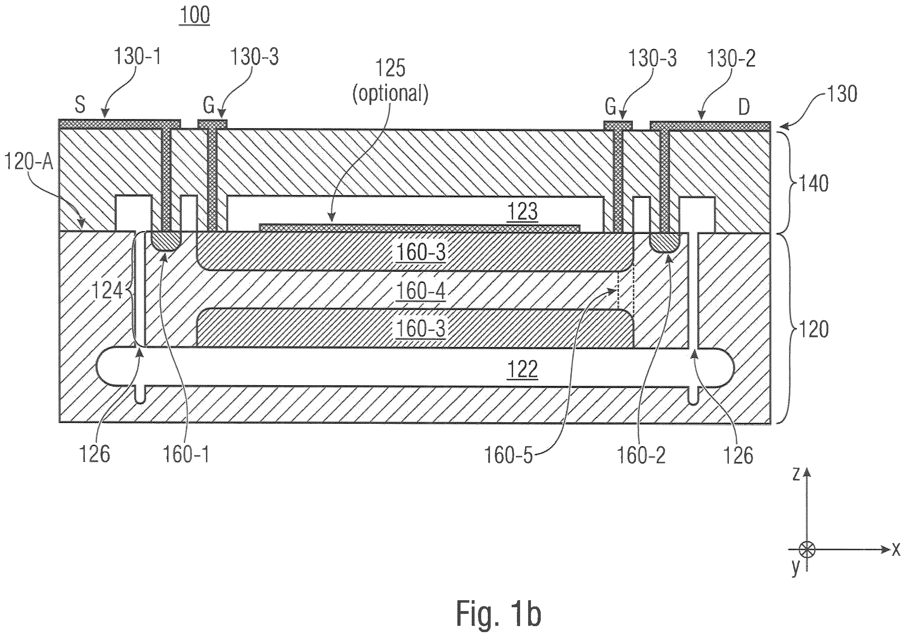

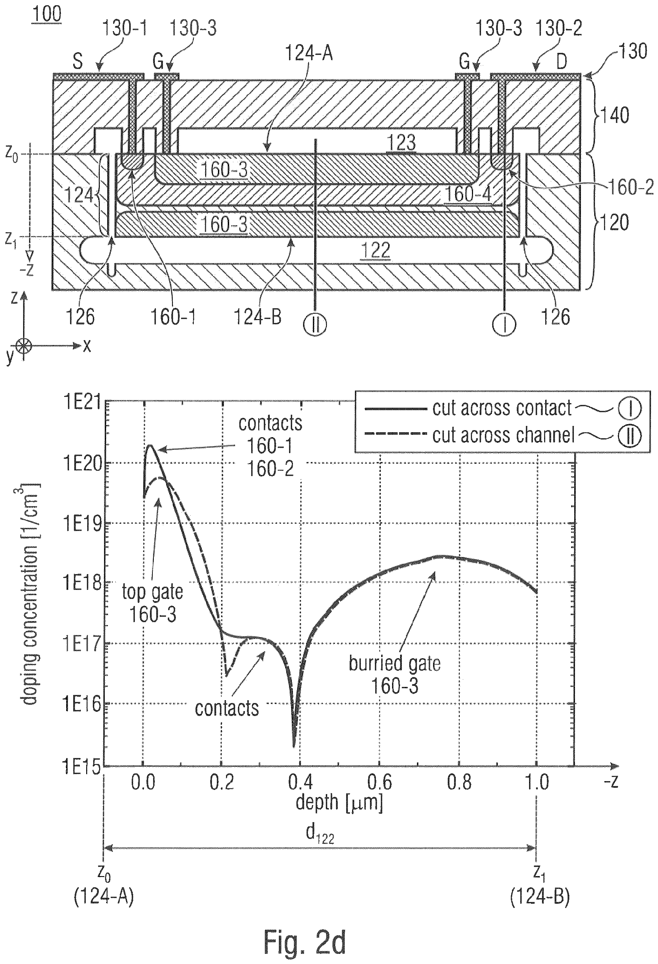

Thus, Fig. 1a shows a schematic cross-sectional view of a temperature sensing device 100, wherein the SON membrane element 124 comprises the transistor structure 160 in form of a bipolar transistor, e.g. a BJT = bipolar junction transistor. Thus, as shown in Fig. 1b, the transistor structure 160 may be formed as a bipolar junction transistor, wherein the first transistor region 160-1 forms an emitter region, the second transistor region 160-2 forms a collector region and the third transistor region 160-3 forms a basis region of the bipolar junction transistor 160. According to an embodiment, the temperature dependency or sensitivity of the base-emitter diode of the bipolar junction transistor 160 may form a temperature dependent, electrical parameter of the transistor structure 160 so that during an operational condition of the transistor structure, the transistor output signal S_{OUT} is based on the temperature dependent, electrical parameter of the transistor structure 160. According to an embodiment, the bipolar junction transistor 160 may be part of a common emitter (CE) amplifier circuit, see for example Fig. 2d and the corresponding description thereof below.

As exemplarily shown in Fig. 1a, the semiconductor material of the SON substrate 120 may comprise a basic (initial) p-type doping with a p-doping concentration in the range between 10¹⁵ cm⁻³ and 10¹⁸ cm³. The emitter region may comprise a p+-type doping concentration in the range between 10¹⁹ cm⁻³ and 1x10²¹ cm⁻³. The n-type base region (third transistor region) 160-3 may comprise a doping concentration in the range of 10¹⁷ cm⁻³ and 1x10²¹ cm⁻³. The remaining p-type semiconductor material of the SON membrane may form the collector region 160-2 (second transistor region) of the bipolar junction transistor 160.

With regard to the above-described specifications for the doping types and doping concentrations of the different regions of the transistor structure 160 (bipolar junction transistor), it should be noted that complementary doping types may be utilized in accordance with embodiments.

According to an embodiment, the temperature sensing device 100 may optionally comprise an absorber layer 125 on a main surface region 124-A of the SON membrane element 124. The absorber layer 125 covers at least partially the main surface region 124-A of the SON membrane element 124, e.g. the area of incident radiation. The absorber layer 125 supports the temperature sensing device 100 (bolometer device) to measure the power of incident electromagnetic radiation via the heating of the semiconductor material of the BJT transistor structure 160 having the temperature dependent electrical characteristic. The (optional) absorber layer 125 is arranged on the SON membrane element 124 to effectively convert the incident radiation by means of absorption into thermal energy, which heats the material of the absorber layer 125 and, thus, by heat transfer (= thermal conduction) the material of the semiconductor material of the BJT transistor structure 160 The material of the absorber layer 125 may comprise a solid homogeneous layer having amorphous silicon or carbon or any material with an amorphous lattice. According to a further embodiment, the material of the absorber layer 125 may comprise a non-homogeneous layer with a grating, plasmonic or metamaterial (= Photonic crystal) structure. The non-homogeneous layer may comprise a metal, e.g. aluminum, or a doped semiconductor, e.g. silicon. In case of the non-homogeneous layer having a plasmonic structure, the creation of a plasmon resonance may increase the absorption of the incident electromagnetic radiation.

To summarize, embodiments concentrate on the possibility of a transistor (e.g. BJT) integration directly on the SON membrane element 124 and using the transistor structure 160 as a temperature sensor. Thus, a temperature dependent, electrical parameter of the transistor structure 160, for example of the base-emitter diode of a BJT, may provide for the temperature dependent output signal S_{OUT}. Fig. 1a exemplarily shows a two diffusion solution in the semiconductor material of the SON membrane element 124. The transistor structure 160 is formed by an n-type well (basis region 160-3) and an S/D p-type implant as the emitter region 160-1 (first transistor region) of a pnp bipolar junction transistor 160. The remaining semiconductor material (p-type semiconductor material) of the SON membrane element 124 may form the collector region 160-2 (= the second transistor region) for achieving a BJT configuration, wherein the electrical contacts 130-1, 130-2, 130-3 between the base region 160-3 and the collector region 160-2 are separately routed out so that the transistor structure 160 can be implemented as a pnp bipolar transistor.

The temperature sensing can be performed by means of the base-emitter diode, wherein the base current provides an amplification and can be read out as the collector current. An amplification factor varies dependent on the technology and typically lies in the range between 10 and 100. Operating the temperature sensing device 100 as a transistor is highly beneficial as it adds sensitivity to the device, wherein using the transistor structure 160 (BJT) as part of an amplifier circuit the current signal S_{OUT} can be directly converted into a voltage signal, which might simplify the read-out of the device 100.

Fig. 1b shows a schematic cross-sectional view of a temperature sensing device 100 according to a further embodiment.

As shown in Fig. 1b, the temperature sensing device 100, which may, for example, form a bolometer pixel, comprises a SON substrate 120 (SON = silicon on nothing) having a SON cavity 122 in a semiconductor material, wherein a SON membrane element 124 is formed between a main surface region 120-A of the SON substrate 120 and the SON cavity 122 and is laterally bordered by a trench structure 126. The temperature sensing device 100 further comprises a capping (or lid) structure 140 for covering the SON membrane element 124 and for mechanically holding the SON membrane element 124 into position with respect to the SON substrate 120. The temperature sensing device 100 further comprises a transistor structure 160 integrated in the semiconductor material of the SON membrane element 124. The transistor structure 160 has a first transistor region, e.g. a first terminal, and a second transistor region, e.g. a second terminal, both having a first doping type, and has a third transistor region, e.g. a control region, having a complementary, second doping type.

As schematically shown in Fig. 1b, the transistor structure may comprise a field effect transistor, e.g. a junction field effect transistor (JFET) having a n-type channel or a p-type channel 160-4.

Thus, the transistor structure 160 may be formed as a junction field effect transistor in the SON membrane element 124, wherein the first transistor region 160-1 forms a source region, the second transistor region 160-2 forms a drain region, and the third transistor region 160-3 forms a gate region of the JFET transistor structure 160.

As shown in Fig. 1b, a sinker diffusion 160-5 may be provided for connecting the top and bottom portions of the gate regions 160-3. Moreover, the channel region 160-4 extends from the source region 160-1 to the drain region 160-2 and between the top portion of the gate region 160-3 and bottom portion of the gate region (= buried gate) 160-3 and may be formed by means of a epitaxial growth or a implantation process.

The JFET comprises a long channel 160-4 of semiconductor material, doped to contain an abundance of positive charge carriers or holes (*p-type*), or of negative carriers or electrons (*n-type*). Ohmic contacts at each end form the source region 160-1 and the drain region 160-2. A pn-junction is formed on one or both sides of the channel, or surrounding it, using a region with doping opposite to that of the channel, and biased using an ohmic gate contact as the gate region 160-3. Thus, based on the structure of the JFET 160 as shown in Fig. 1b, the charge carrier transport is conducted horizontal (parallel to the x-y-plane) through the semiconductor material of the SON membrane element 124.

According to an embodiment, the temperature sensing device 100 may optionally comprise an absorber layer 125 on a main surface region 124-A of the SON membrane element 124. The absorber layer 125 covers at least partially the main surface region 124-A of the SON membrane element 124, e.g. the area of incident radiation. The absorber layer 125 supports the temperature sensing device 100 (bolometer device) to measure the power of incident electromagnetic radiation via the heating of the semiconductor material of the field effect transistor structure 160 (JFET) having the temperature dependent electrical characteristic. The (optional) absorber layer 125 is arranged on the SON membrane element 124 to effectively convert the incident radiation by means of absorption into thermal energy, which heats the material of the absorber layer 125 and, thus, by heat transfer (= thermal conduction) the material of the semiconductor material of the field effect transistor structure 160 The material of the absorber layer 125 may comprise amorphous silicon or carbon or any material with an amorphous lattice. According to a further embodiment, the material of the absorber layer 125 may comprise a non-homogeneous layer with a grating, plasmonic or metamaterial (= photonic crystal) structure. The non-homogeneous layer may comprise a metal, e.g. aluminum, or a doped semiconductor, e.g. silicon. In case of the non-homogeneous layer having a plasmonic structure, the creation of a plasmon resonance may increase the absorption of the incident electromagnetic radiation.

According to a further embodiment, the transistor structure 160 may also be formed as a folded junction field effect transistor. Based on the structure of a folded JFET 160 (not shown), the charge carrier transport is also conducted lateral (parallel to the x-direction) through the semiconductor material of the SON membrane element 124.

To be more specific, for JFETs 160 the channel is formed by the thickness in z-direction and either L (length) or W (width), dependent on which orientation L or W is parallel to the x-direction. In a folded JFET device, the length L of the transistor is sacrificed to have a second parallel transistor. So, the width W is effectively doubled and the length L is halved (divided by 2) for achieving a resulting current strength increased by the factor of 4 (x4 the current). The folded JFET structure is a measure to increase the current of the JFET device. The current transport is still lateral, just the channel is shorter and there are now two JFET devices.

Thus, the temperature sensitivity or dependency of the channel region conductivity of the junction field effect transistor may form the temperature dependent, electrical parameter of the JFET 160.

In general, a JFET has a positive temperature coefficient for small currents (close to pinch off) because the depletion region effects are dominating. For higher currents, the device shows a negative temperature coefficient since mobility reduction due to phonon scattering is dominant. Folded JFET is just a standard JFET with a more optimized area.

To summarize, according to the embodiments of the temperature sensing device 100 as shown with respect to Figs. 1a - b, the transistor structure 160 is configured to provide during an operational condition a transistor output signal S_{OUT} based on a temperature dependent, electrical or electronical parameter of the transistor structure 160, wherein a momentary temperature T₀ of the semiconductor material of the SON membrane element 124 is derivable from the transistor output signal S_{OUT}.

As exemplarily shown in Fig. 1a-b, the SON cavity 122 in the semiconductor material of the SON substrate 120 may extend essentially in parallel to the first main surface region 120-A of the SON substrate 120 in a distance or depth d₁₂₂ from the first main surface region 120-A. Thus, the depth d₁₂₂ corresponds to the thickness of SON membrane element 124. The SON cavity 122 in the semiconductor material of the SON substrate 120 has a height h₁₂₂. The SON membrane element 124 has a lateral dimension (length) l₁₂₂. The depth d₁₂₂ (the thickness of SON membrane element 124) may range between 1 and 15 µm or between 1 and 10 µm or between 1 and 3 µm or may be (about) 1µm. A thickness d₁₂₂ of SON membrane element 124 of about 1 µm may be assumed, which is sufficient to implement the device (the transistor structure 160), wherein increasing the thickness also would increase the thermal losses through the design with silicon cantilevers see below), since the cantilevers share the same thickness. Also the losses through the trenches 126 also are dependent on the thickness d₁₂₂ of the SON membrane structure 124 (as the area is increased). As current technology allows thicknesses up to 15µm, the thickness d₁₂₂ may range between 1 and 15 µm.

The thickness h₁₂₂ of the SON cavity 122 may range between 1 and 20 µm or between 1 and 10 µm or between 1 and 3 µm or may be (about) 1µm, for example.

The lateral dimension (length - parallel to the x-direction) 1122 of the SON membrane element 124 may range between 10 and 100 µm or between 15 and 35 µm or may be (about) 25 µm. The width (parallel to the y-direction - not shown in Figs. 1a-b) of the SON membrane element 124 may range between 10 and 100 µm or between 15 and 35 µm or may be (about) 25 µm. According to an embodiment, a pixel pitch of 25µm ± 5 µm can be chosen to implement in a compact array of temperature sensing devices 100. For maximal efficiency of the temperature sensing device 100 a greater area (length x width) can be used, since the absorbed power is proportional to area of the temperature sensing devices 100.

As shown in Fig. 1a-b, the trench structure 126 in the SON substrate provides a lateral confinement or border of the SON membrane element 124, wherein the SON cavity 122 provides at least partially a confinement of the SON membrane element 124 in the depth direction of the SON substrate 120. Thus, the SON membrane element 124 is laterally separated from the laterally surrounding SON substrate 120 by the trench structure 126 and is vertically separated, i.e. in the depth direction, from the semiconductor material of the SON substrate by the SON cavity 122. Thus, the trench structure 126, which may comprise trenches 126 which extend from the first main surface region 120-A from the SON substrate 120 to the SON cavity 122, provides in combination with the SON cavity 122 a separation of the SON membrane element (lamella) 124 from the surrounding semiconductor material of the SON substrate 120. Thus, the trench structure 126 and at least partially the SON cavity 122 provide a thermal insulation and, for example, further a mechanical stress decoupling of the semiconductor material of the SON membrane element 124 from the surrounding semiconductor material of the SON substrate 120. The trench structure 126 and at least partially the SON cavity 122 may provide also an electrical insulation from the neighboring regions.

As further optionally shown in Fig. 1a-b, the capping structure 140 may comprise a contact arrangement 130 having a plurality of conductor structures 130-1, 130-2 and 130-3 for providing an externally accessible terminal structure, e.g. contact pads for electrically connecting the first, second and third transistor regions 160-1, 160-2, 160-3.

The temperature sensing device 100 may further comprise a cantilever structure 180 (not explicitly shown in Fig. 1a-b), the cantilever structure 180 being configured to provide a mechanical coupling between the SON membrane element 124 and the capping structure 140 for bearing or supporting, i.e. for mechanically holding, the SON membrane element 124 into position with respect to the SON substrate 120 and with respect to the capping structure 140. Thus, the cantilever structure 180 mechanically bonds the SON membrane element 124 to the capping structure 140.

According to an embodiment, the cantilever structure 180 may be formed by the semiconductor (e.g. silicon or a polysilicon) material of the SON substrate 120. According to a further embodiment, the cantilever structure 180 may be formed by an insulating (e.g. oxide or nitride) material of the capping structure 140. According to an embodiment, the capping structure 140 may be arranged to provide a sealed cavity 123 for the SON membrane element 124, wherein the SON membrane element 124 is suspended in the sealed cavity 123.

In general, the cantilever structure 180 may comprise a sandwich structure (Insulator-conductor-insulator). A symmetric cantilever structure 180 may allow for to counter the bending from a mismatch of the thermal expansion coefficients. The conductor layer of the sandwich structure may comprise poly silicon, silicides (TiSi, CoSi) or metals, such as W, Ti, Co, Al.

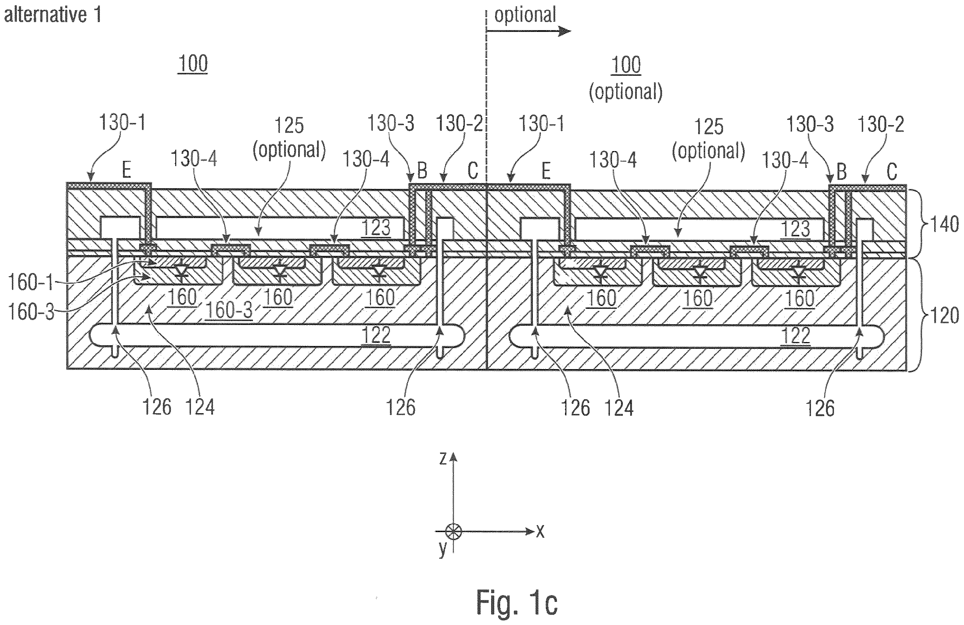

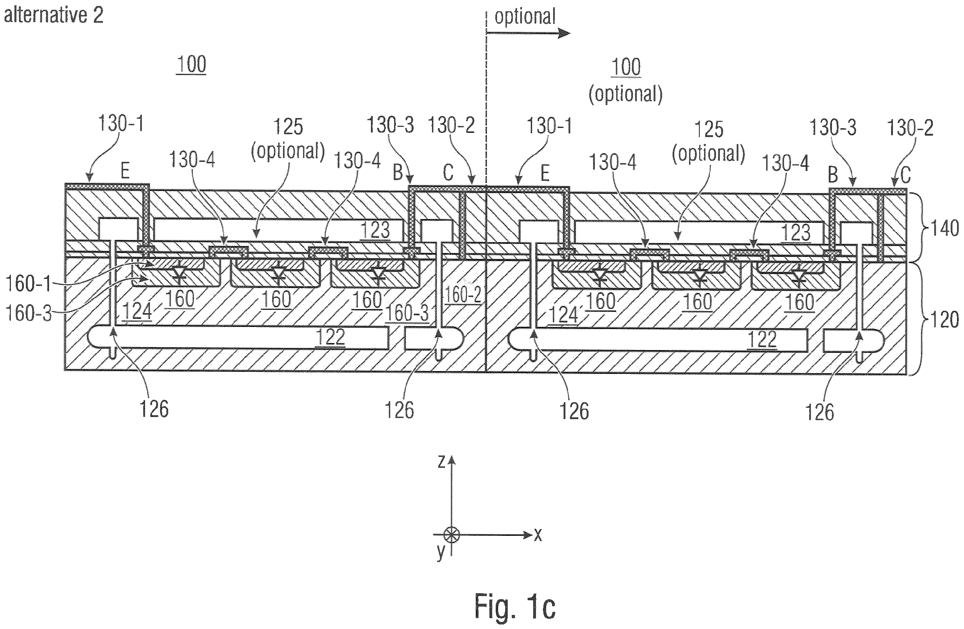

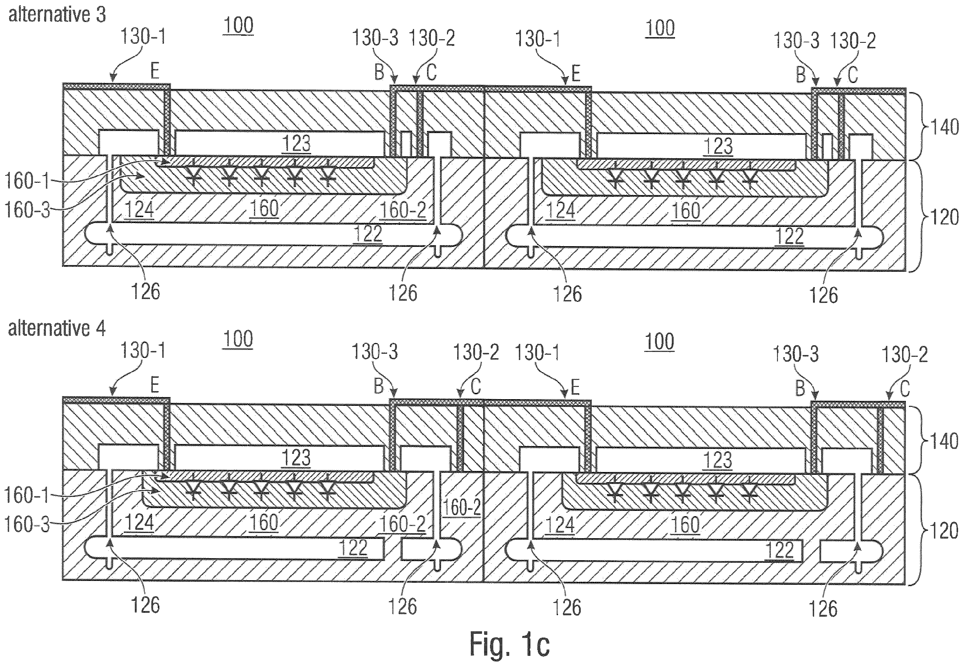

Fig. 1c shows schematic cross-sectional views of different possible implementations of the temperature sensing device 100 having a "serial" connection of a plurality of diode structures based on the BJT transistor structures 160 in the SON membrane element 124 according to an embodiment. The BJT transistor structures 160 provide a base-emitter (BE) diode configuration by electrically connecting (shorting) the respective base (B) and collector (C) regions. Thus, the temperature dependency or sensitivity of the base-emitter diode of the BJT transistor structure 160 may form the temperature dependent, electrical parameter thereof.

According to an embodiment, the BJT transistor structure 160 is connected in a diode form (with C and B shorted, so only a BE diode is left). Then it is possible to have a series connection of diodes in the same collector well. For example, a diode has a dependency of 2.8mV/°C, so a series connection of multiple devices then scales the sensitivity.

As shown in alternatives "1" and "2" of Fig. 1c, a series connection of BJT transistor structures 160-1, 1602, 160-3 may be arranged in the SON membrane element 124, e.g. as an array of BJT transistor structures 160-1, 160-2, 160-3 implanted side by side in the semiconductor material of the SON membrane element 124. Separate diffusions in the semiconductor material of the SON membrane element allow independent transistor operation, which is necessary for their operation. Polysilicon bridges 130-4 may be used to connect all the devices in series. It is expected that the individual junction voltages, e.g. the base-emitter junction voltages, should superimpose and produce a greater output signal S_{OUT}.

According to alternative "1" of Fig. 1c, the SON membrane element 124 comprises the emitter region 160-1, the basis region160-3, wherein the remaining p-type semiconductor material of the SON membrane forms the collector region 160-2 of the BJT structure 160. Optionally, several temperature sensing devices 100 (= pixels) are connected in series.

According to alternative "2" of Fig. 1c, a mechanical and electrical connection between the second transistor region 160-2 (collector region) of the BJT structure 160 is provided with the semiconductor material of the SON substrate 120. In this case, the collector contact can be regarded as a "substrate contact" of the SON substrate 120 of the temperature sensing device 100. Optionally, several temperature sensing devices 100 (= pixels) are connected in series.

As shown in alternatives "3" and "4" of Fig. 1c, a single BJT transistor structure 160 in diode configuration is provided per SON membrane element 124, wherein several temperature sensing devices 100 (= pixels) are connected in series.

According to alternative "3" of Fig. 1c, the SON membrane element(s) 124 each comprise the emitter region 160-1, the basis region160-3, wherein the remaining p-type semiconductor material of the respective SON membrane forms the collector region 160-2 of the BJT structure 160.

According to alternative "4" of Fig. 1c, in each temperature sensing device 100 (= pixel) a mechanical and electrical connection between the second transistor region 160-2 (collector region) of the BJT structures 160 is provided with the semiconductor material of the SON substrate 120. In this case, the collector contact can be regarded as a "substrate contact" of the SON substrate 120 of the temperature sensing devices 100.

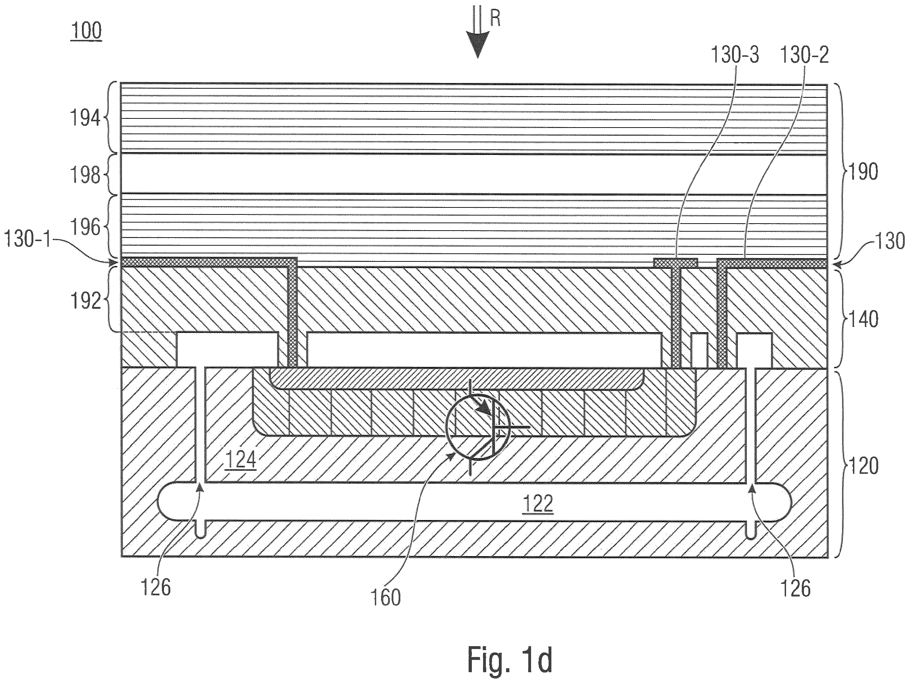

Fig. 1d shows a schematic cross-sectional view of a temperature sensing device 100 having an optical filter structure 190 according to an embodiment. The optical filter structure 190 may comprise any filter that selectively transmits light in a particular range of wavelengths, e.g. a band of wavelengths, blocking both longer and shorter wavelengths (band-pass). A possible optical filter structure 190 may comprise a Fabry Pérot filter (FP filter), wherein several FP filter options are available in thin film technology. A further possible optical filter structure 190 may comprise a plasmonic filter which may use an aluminum film with a grating structure to perform filtering. Finally, a grating or a metamaterial (= photonic crystal) structure can be used and is supported by the CMOS technology.

To be more specific, the temperature sensing device 100 may comprise the optical filter element 190 for an incident radiation "R" at the capping structure 140. The optical filter element 190 is arranged in illumination direction upstream to the SON membrane element 124 having integrated thereon the transistor structure 160. Moreover, the insulating material of the capping structure 160 may at least partially be configured to provide a matching layer 192 for the radiation R incident to the capping structure 140.

According to an embodiment, the temperature sensing device 100 may optionally comprise the absorber layer 125 on a main surface region 124-A of the SON membrane element 124 (see Fig. 1a-b, for example).

Thus, the temperature sensing device 100 having the optical filter element 190, e.g. in form of a filter stack on top of the capping structure 140, may be used for spectrometer and/or gas sensing applications. A simple filter stack is a Fabry Pérot interferometer but comprises two mirrors 194, 196, e.g. two mirror stacks = Bragg mirrors, with a spacer 198 therebetween. The thickness of the spacer 198 defines the transmission wavelength of the optical filter 190, wherein the quality of the two opposing mirrors 194, 196 defines the edge steepness and the FWHM (full width at half maximum), i.e. the band-pass filter characteristic of the optical filter element 190. The rest of the capping element (= sealing lid) 140, i.e. at least a layer thereof, can be used as the matching layer 192.

To summarize, embodiments create a temperature sensing device 100 in form of a bolometer pixel based on a SON processing. Thus, as shown in Fig. 1d, a single temperature sensing device 100 with a sensing structure in form of the transistor structure 160 suspended in a vacuum (or near vacuum = low pressure) cavity is presented. In form of a stand-alone device, the temperature sensing device 100 can be used as a temperature sensor, e.g. in a gas measurement environment or setup.

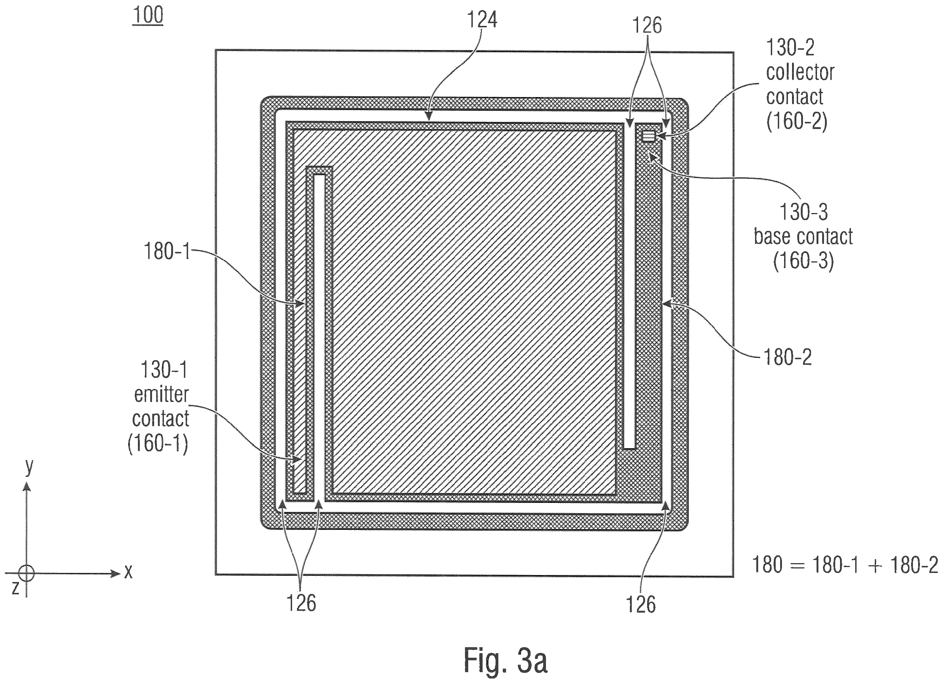

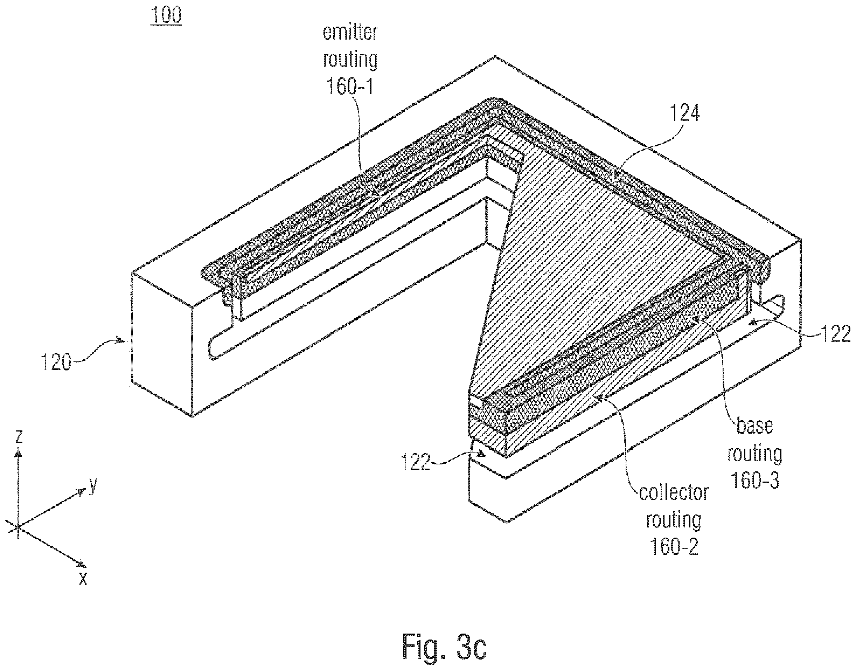

As described below with respect to Figs. 3a-c in further detail, the location of the contact elements 130-1, 130-2, 130-3 may be chosen based on the specific configuration of the cantilever structure 180 configured to provide a mechanical coupling between the SON membrane element 124 and the capping structure 140 for bearing the SON membrane element 124 with respect to the SON substrate 120.

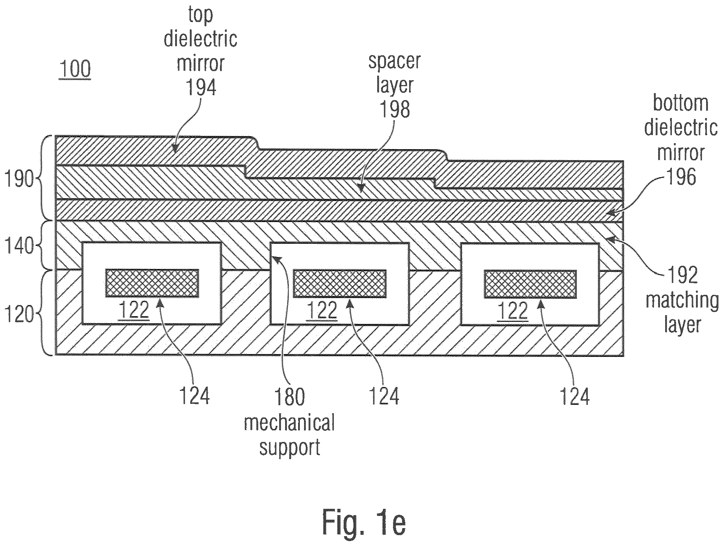

As shown in Fig. 1e, an array of temperature sensing devices 100 with deposited filter stacks and lenses 190 can be used as a miniaturized IR (IR = infrared) spectrometer.

Each of the temperature sensing devices 100 may comprise an optical filter element 190 for an incident radiation R at the capping structure 140 in illumination direction upstream to the SON membrane element 124 having integrated thereon the transistor structure 160. Moreover, the insulating material of the capping structure 160 may at least partially be configured to provide a matching layer 192 for the radiation R incident to the capping structure 140.

The different thicknesses of the spacer 198 defines the transmission wavelengths of the optical filters 190, wherein the quality of the two opposing mirrors 194, 196 defines the edge steepness and the FWHM (full width at half maximum), i.e. the band-pass filter characteristic of the optical filter element 190.

In both cases, the transistor structure 160, e.g. a BJT or a JFET, is integrated in the semiconductor material of the SON membrane element 124 for sensing a temperature change of the semiconductor material of the SON membrane element 124.

To summarize the embodiments of Figs. 1a-e, a SON substrate 120 having a SON cavity 122 is provided, wherein the SON cavity (Venezia cavity) 122 forms a bottom insulation layer or region for the SON membrane element 124. The top sealing in form of the capping structure 140 may be formed by a carbon sacrificial layer, wherein the electrical performance of the integrated transistor structure 160 in the SON membrane element is defined by the implant regions in the semiconductor material for forming the transistor structure 160. Once the SON membrane element 124 is structured/cut out by means of the trench structure 126, the only mechanical contact for the SON membrane element 124 is the mechanical connection to the capping structure (oxide lid) 140. Vias and/or conducting traces 130 may also be embedded into these oxide contacts. As an optional measure, an optical filter structure 190 may be deposited on the capping structure 140, wherein an integrated lens structure may be formed by means of a reflow process, for example.

The proposed device 100 can be operated as a high resolution temperature sensor device or sensor pixel in a bolometer, IR camera, IR spectroscopy and/or gas sensing application.

The bolometer design can easily be rearranged to be used as part of a multi-gas sensing system, using the described temperature sensing device 100 as a high resolution temperature sensor and for IR sensing, especially having expanded the sensitivity in the NIR range (NIR = near infrared), since most of the effects, e.g. for gas concentration sensing, are present at those wavelengths. Moreover, the defined temperature sensing device 100 can be integrated to produce an NIR spectrometer.

Embodiments relate to a temperature sensing device (bolometer pixel) 100 based on SON processing (SON = silicon on nothing), wherein the SON membrane element 124 with a (single) sensing element 160 in form of the transistor structure is suspended for thermal and/or electrical insulation in a cavity 122, e.g. a low pressure or vacuum cavity. In form of a stand-alone device, the temperature sensing device 100 can be used as a temperature sensor in a gas measurement setup. An array of devices 100 with deposited filter stacks and lenses 190, for example, can be used as a miniaturized IR spectrometer. In both cases, the transistor structure 100 integrated in the semiconductor material of the SON membrane element 124 is the sensing device 100 for sensing the temperature change of the semiconductor material of the SON membrane element 124.

Device benefits include the following aspects, such as: simplicity in manufacturing, high reliability achieved by use of crystalline silicon, direct integration with filter elements 190, e.g. Bragg filter elements to form a Fabry Pérot filter, compactness of the setup and possibility of array integration, miniaturization possibilities, high sensitivity and/or easy readout and system integration.

According to embodiments, the temperature sensing device 100 may be built by means of a SON process resulting in an improved temperature efficiency of the sensor device 100, since the suspended structure 124, which is sealed at low pressure, e.g. vacuum or nearly vacuum, can greatly reduce or nearly eliminate air losses of the temperature sensing device 100.

The temperature sensing device 100 may be driven into an operation regime with an high small-signal resistance. This allows direct integration into common circuits as a transistor.

Moreover, the temperature sensing device 100 may be manufactured as an array with different filter stacks 190 deposited on top. A possible integration scheme for the filter 190 can include a matching layer 192 formed by the capping structure (lid) 140 and a Fabry Pérot interferometer 190. The Fabry Pérot interferometer 190 may be produced by a bottom dielectric mirror deposition 194, e.g. a Bragg mirror, with a plurality of Si/SiOx or Si/Nitride material pairs, an oxide or nitride spacer 198 and a top mirror (Bragg mirror) 196, for example. The thickness of the oxide spacer 198 determines the filter characteristic, e.g. the band-pass range, of the Fabry Pérot interferometer 190.

The proposed temperature sensing device 100 can be used, for example, for a photoacoustic gas sensing system, e.g. operating in the visible radiation range, and can further expand the sensitivity range into the NIR range for mobile compact spectrometer applications. Mobile compact spectrometer applications are of special interest since most of materials are effects exhibit strong dependencies in the NIR range, therefore performing the analysis in the NIR range is highly beneficial.

The described temperature sensing device or pixel 100 can be used for uncooled IR bolometers 200, which can be easily integrated with a read-out circuitry 210 and maintains a simple manufacturing scheme. For this reason, the process flexibility allows combination with optics.

According to an embodiment, the temperature sensing device 100, e.g. for a bolometer application, comprises the transistor structure 160 in the semiconductor material of a SON membrane element 124, wherein the SON membrane element 124 is thermally insulated from the remaining and surrounding semiconductor material of the SON substrate 120.

The approach of using a SON substrate 120, i.e. the SON processing, opens a possibility for a direct transistor integration, e.g. a bipolar junction transistor 160 or a junction field effect transistor 160, on the SON membrane 124, which is thermally insulated from the remaining SON substrate material. The operation mechanism may rely on the sensitivity of the base-emitter diode for a bipolar junction transistor (BJT) 160, wherein the collector current is amplified by a factor of 10 - 100 dependent on the technology. Apart from the current gain, the transistor structure 160 can be directly used as a part of an amplifier circuit.

Referring to the base-emitter diode of a BJT structure 160, such a diode exhibits a strong temperature dependency in both forward and reverse biasing conditions. Several regimes can be used to sense the temperature difference:
1. Forwarding biased at a constant voltage with detection of the current changes
2. Reverse biased and sensing the change in saturation current
3. Sensing the junction potential

Even though a single transistor device 160 is enough to generate the temperature dependent signal S_{OUT}, a common approach, however, is to implant several transistor structures 160 with different areas and sense the difference in the voltage V_{OUT}. This way the technology dependent parameters cancel out and the assembly shows an improved reproducibility.

According to an embodiment, the transistor device 160 of the temperature sensing device (bolometer pixel) 100 may be operated with a restive load R_{L} or with an active load (=dynamic load). According to an embodiment, the resistive load R_{L} may be implemented as a fixed (external) resistor or may be implemented as a suspended resistor, which is integrated into the semiconductor material of the SON membrane element 124. According to a further embodiment, the transistor device 160 of the temperature sensing device (bolometer pixel) 100 may be operated with an active load (= dynamic load). An active load may comprise a circuit component made up of active devices, such as transistors, intended to present a high small-signal impedance yet not requiring a large DC voltage drop, as would occur if a large resistor were used instead.

According to a further embodiment, the transistor device 160 of the temperature sensing device (bolometer pixel) 100 may be operated in any suitable analog circuitry, e.g. in a cascode stage for higher gain, in a differential pair or in a bridge circuit.

To summarize, in terms of geometry, the proposed temperature sensing device 100 represents a suspended structure with the bottom and top cavities manufactured by means of SON and carbon sacrificial methods. The temperature sensing device 100 can be used as a single device or in form of an array. Additionally processing allows filter 190 deposition.

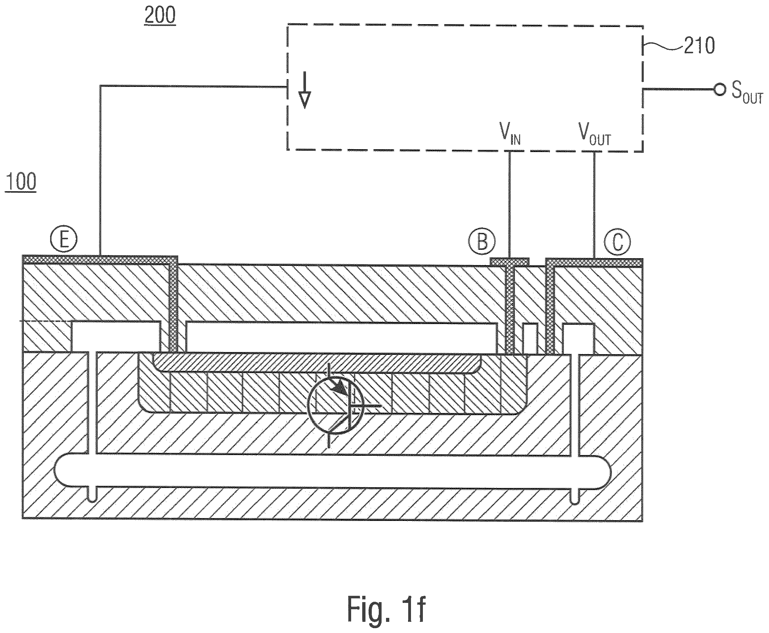

Fig. 1f shows a schematic view of a bolometer device 200 (uncooled bolometer) comprising the temperature sensing device 100 having the SON membrane element 124 in the SON substrate 120 and the transistor structure 160 integrated in the semiconductor material of the SON membrane element 124 as described with respect to Figs. 1a-e (and with respect to the following figures), and an evaluation circuit 210 for deriving an information on the momentary temperature of the semiconductor material of the SON membrane element 124 from the transistor output signal.

According to an embodiment, the bolometer device 200 may comprise a plurality of temperature sensing devices 100, wherein the temperature sensing devices are arranged in an array, and wherein the evaluation circuit 210 is configured for deriving the momentary temperature of the semiconductor material of the SON membrane elements 124 based on the respective transistor output signal S_{OUT} from the temperature sensing devices 100.

According to an embodiment, different types of optical filter elements 190 for an incident radiation R may be arranged at the capping structure 140 in illumination direction upstream to the SON membrane elements 1024.

In the following, a number of different possible implementations of the temperature sensing device 100 are exemplarily described. In the present description of embodiments, the same or similar elements having the same function have associated therewith the same reference signs or the same name, wherein a description of the such elements will not be repeated for every embodiment.

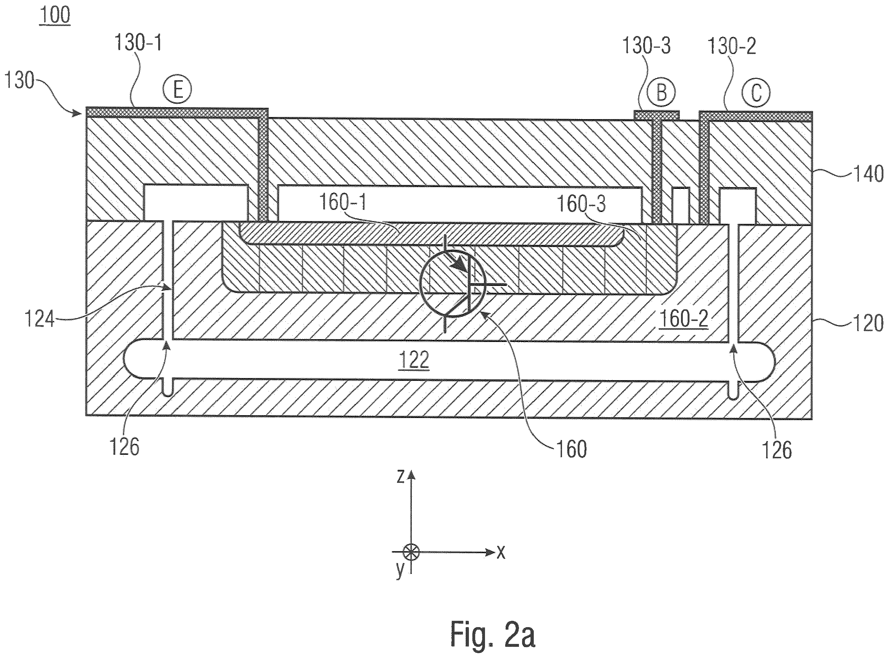

Fig. 2a shows a schematic cross-sectional view of the temperature sensing device 100 having a transistor structure 160 in form of a BJT according to an embodiment. As shown in Fig. 2a, the transistor structure 160 integrated to the semiconductor material of the SON membrane element 124 shows a two diffusion solution with a BJT-based detector, i.e. a pnp BJT. The first transistor region 160-1 forms an emitter region connected to the first contact element 130-1, the second transistor region 160-2 forms a collector region connected to the second contact element 130-2, and the third transistor region 160-3 forms a basis region connected to the third contact element 130-3.

As shown in Fig. 2a, the vias 130-1, 130-2, 130-3 are embedded into the insulation material of the capping structure 140 to provide an electrical connection between the respective transistor regions 160-1, 160-2, 160-3 and the contact pads on the capping structure 140.

To summarize, the temperature sensing device 100 comprises a pnp BJT 160 integrated in the semiconductor material of the SON membrane element 124, wherein three contact elements/pads 130-1, 130-2, 130-2 are arranged on the capping structure 140.

According to a further implementation, an embodiment (not shown in Fig. 2a) may comprise a mechanical and electrical connection between the second transistor region 160-2 (collector region) of the transistor structure 160 with the semiconductor material of the SON substrate 120 both having the same doping type and, optionally, the same doping concentration. In this case, the collector contact can be regarded as a "substrate contact" of the SON substrate 120 of the temperature sensing device 100.

With regard to the above-described specifications for the doping types and doping concentrations of the different regions of the transistor structure 160 (bipolar junction transistor), it should be noted that complementary doping types may be utilized in accordance with embodiments.

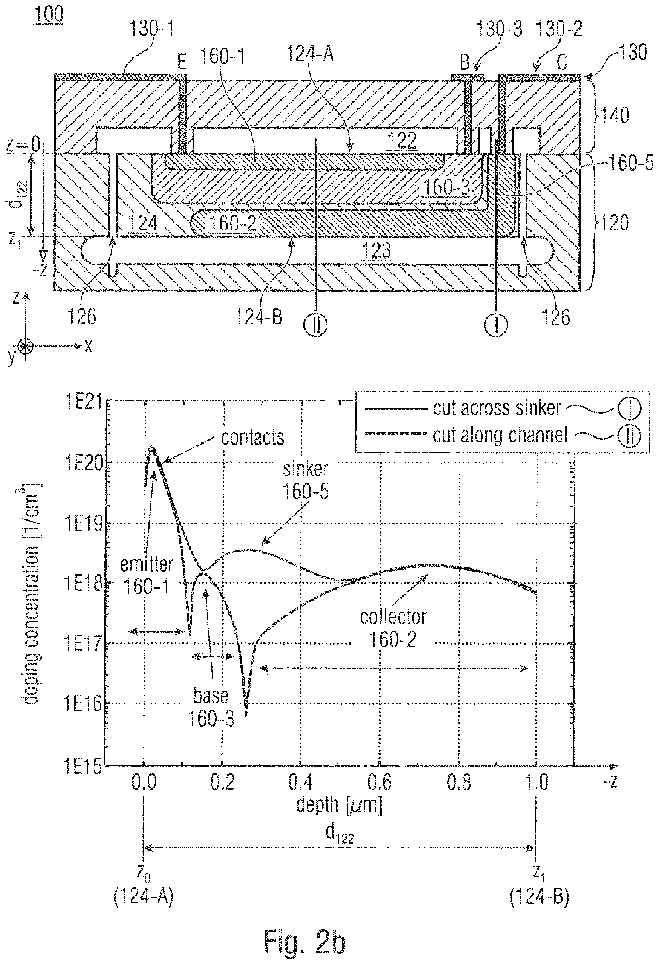

Fig. 2b shows a schematic cross-sectional view of the temperature sensing device 100 having a transistor structure 160 in form of a BJT according to an embodiment.

As shown in Fig. 2b, the transistor structure 160 integrated in the semiconductor material of the SON membrane element 124 is formed as an npn BJT, wherein the semiconductor material of the SON substrate 120 and the semiconductor material of the SON membrane element 124 comprise a low p-doping concentration. The first transistor region 160-1 forms an emitter region connected to the first contact element 130-1, the second transistor region 160-2 forms a collector region connected to the second contact element 130-2, and the third transistor region 160-3 forms a basis region connected to the third contact element 130-3. As shown in Fig. 2b and compared to Fig. 2a, the second transistor region 160-2 (collector region) is formed by a n+-doped semiconductor region connected to the second contact element 130-2.

The transistor design of the npn BJT as shown in Fig. 2b provides a relatively uniform lateral current distribution between the emitter region 160-1 and collector region 160-2 through the base region 160-3 of the BJT.

According to an embodiment, Base, Collector and Emitter implants 160-3, 160-2, 160-1 are designed in a way to overlap (and thus creating the BJT) only in the area of the membrane 124. This is not relevant to the design with oxide cantilevers 180, but to the one with silicon cantilevers. In the latter case each of the cantilevers 180 only has two diffusions. So one cantilever contains the Base-Emitter diffusion and the other one holds the Base-Collector diffusions. All three diffusions overlap only in the middle area of the membrane 124, where the highest temperature or temperature change is achieved

An operation regime may rely on keeping a constant temperature due to self-heating. Any input power that tries to heat the device more lowers the voltage over the transistor to compensate and brings the temperature back the regulated value. Self-heating is sort of a feedback/regulation mechanism here.

Thus, the temperature sensing device 100 of Fig. 2b comprises an npn BJT integrated in the semiconductor material of the SON membrane element 124 wherein three contact elements 170-1, 170-2, 170-3 are arranged on the first main surface region 120-A of the SON substrate 120.

Fig. 2b further shows an illustration of exemplary doping profiles through different regions of the npn BJT 160 of the temperature sensing device 100 according to an embodiment.

The different exemplary doping profiles I, II extend between the first and second main surface regions 124-A, 124-B of the SON membrane element 124. As shown in Fig. 2b, the thickness d₁₂₂ of the SON membrane element 124 is indicated with about 1 µm. However, the illustration of doping profiles I, II is also scalable to different values of the thickness d₁₂₂ of the SON membrane element 124, as the thickness d₁₂₂ of SON membrane element 124 may range between 1 and 15 µm or between 1 and 10 µm or between 1 and 3 µm or may be (about) 1µm. Moreover, the doping profiles I, II show the doping concentrations (in absolute values) of the semiconductor material of the SON membrane element 124 without differentiating between the different doping types.

According to exemplary doping concentrations, the emitter region 160-1 may comprise a (maximum) n+-type doping concentration in the range between 10¹⁹ cm⁻³ and 1x10²¹ cm⁻³. The p-type base region 160-3 may comprise a (maximum) doping concentration in the range of 10¹⁷ cm⁻³ and 1x10²¹ cm⁻³, and the collector region 160-2 may comprise a (maximum) n+-type doping concentration in the range between 10¹⁷ cm⁻³ and 1x10²¹ cm⁻³. With regard to the doping types and doping concentrations of the different regions of the transistor structure 160 (bipolar junction transistor), it should be noted that complementary doping types for a npn BJT may be utilized in accordance with embodiments.

The first exemplary cut I exemplary shows the doping concentration of a highly-doped sinker region 160-5 at a border region of the SON membrane element 124, wherein the sinker region provides the electrical connection between the contact element 130-2 to the collector region 160-2.

The second exemplary cut II exemplary shows the doping concentration through the emitter region 160-1, the basis region 160-3 and the collector region 160-2 of the npn BJT 160 at a center region of the SON membrane element 124, i.e. through the active region (= along the channel) of the npn BJT 160. In case of a npn BJT 160, the emitter region 160-1 comprises a n-doping, the basis region 160-3 comprises a p-doping and the collector region 160-2 comprises a n-doping.

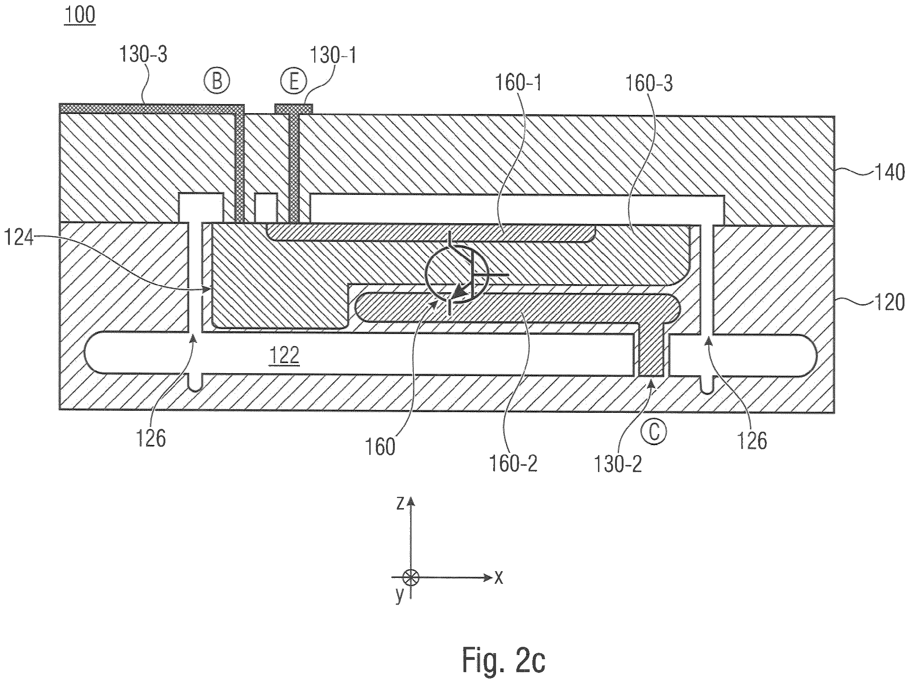

Fig. 2c shows a further schematic cross-sectional view of the temperature sensing device 100 having a transistor structure 160 in form of an npn BJT according to a further embodiment.

As shown in Fig. 2c, the first transistor region 160-1 (base region) and the third transistor region 160-3 (base region) are respectively connected to the contact elements 130-1, 130-3 at the first main surface region 120-A of the SON substrate 120, wherein the second transistor region 160-2 (collector region) is electrically and mechanically connected to the (low p-doped) semiconductor material of the SON substrate 120, so that the emitter contact 160-2 is connected to the semiconductor material of the SON substrate 120 to form a back plate common ground structure 130-2.

The above-described arrangement of the npn BJT integrated in the semiconductor material of the SON membrane element 124 also results in a uniform current distribution between the collector region and the emitter region through the base region.

According to the embodiment of Fig. 2c, a mechanical and electrical connection between the second transistor region 160-2 (collector region) of the transistor structure 160 is provided with the semiconductor material of the SON substrate 120. In this case, the collector contact can be regarded as a "substrate contact" of the SON substrate 120 of the temperature sensing device 100.

Fig. 2d shows a schematic cross-sectional view of a temperature sensing device 100 having an JFET 100 together with an illustration of exemplary doping profiles through different regions of the JFET according to an embodiment.

As shown in Fig. 2d, the transistor structure 160 may comprise a junction field effect transistor (nJFET) having a n-type channel 160-4, wherein the JFET 160 a source region 160-1, a drain region 160-2, and a gate region 160-3. The channel region 160-4 extends from the source region 160-1 to the drain region 160-2 and between the top portion of the gate region 160-3 and bottom portion of the gate region (= buried gate) 160-3.

The nJFET comprises a long n channel 160-4 of semiconductor material, n-doped to contain an abundance of negative carriers or electrons (*n-type*). Ohmic contacts at each end form the source region 160-1 and the drain region 160-2. A pn-junction is formed on one or both sides of the channel 160-4, or surrounding it, using a region with p doping and biased using an ohmic gate contact as the gate region 160-3. Thus, based on the structure of the nJFET 160 as shown in Fig. 2d, the charge carrier transport is conducted horizontal (parallel to the x-y-plane) through the semiconductor material of the SON membrane element 124.

Fig. 2d further shows an illustration of exemplary doping profiles through different regions of the n JFET 160 of the temperature sensing device 100 according to an embodiment.

The different exemplary doping profiles I, II extend between the first and second main surface regions 124-A, 124-B of the SON membrane element 124. As shown in Fig. 2b, the thickness d₁₂₂ of the SON membrane element 124 is indicated with about 1 µm. However, the illustration of doping profiles I, II is also scalable to different values of the thickness d₁₂₂ of the SON membrane element 124, as the thickness d₁₂₂ of SON membrane element 124 may range between 1 and 15 µm or between 1 and 10 µm or between 1 and 3 µm or may be (about) 1µm. Moreover, the doping profiles I, II show the doping concentrations (in absolute values) of the semiconductor material of the SON membrane element 124 without differentiating between the different doping types.

According to exemplary doping concentrations, the source region 160-1 may comprise a (maximum) n+-type doping concentration in the range between 10¹⁷ cm⁻³ and 1x10²¹ cm⁻³. The p-type gate region(s) 160-3 may comprise a (maximum) doping concentration in the range of 10¹⁷ cm⁻³ and 1x10²¹ cm⁻³, and the drain region 160-2 may comprise a (maximum) n+-type doping concentration in the range between 10¹⁷ cm⁻³ and 1x10²¹ cm⁻³. With regard to the doping types and doping concentrations of the different regions of the n JFET 160, it should be noted that complementary doping types for p JFET may be utilized in accordance with embodiments. The channel region 160-4 may be formed either by the background doping or by a channel implant ranging between 10¹⁵ cm⁻³ and 1x10²¹ cm⁻³.

The first exemplary cut I exemplary shows the doping concentration across the drain region (contact region 160-2) to the channel region 160-4 at the border of the SON membrane element 124, wherein the drain region 160-2 provides the electrical connection between the contact element 130-2 to the channel region 160-4.

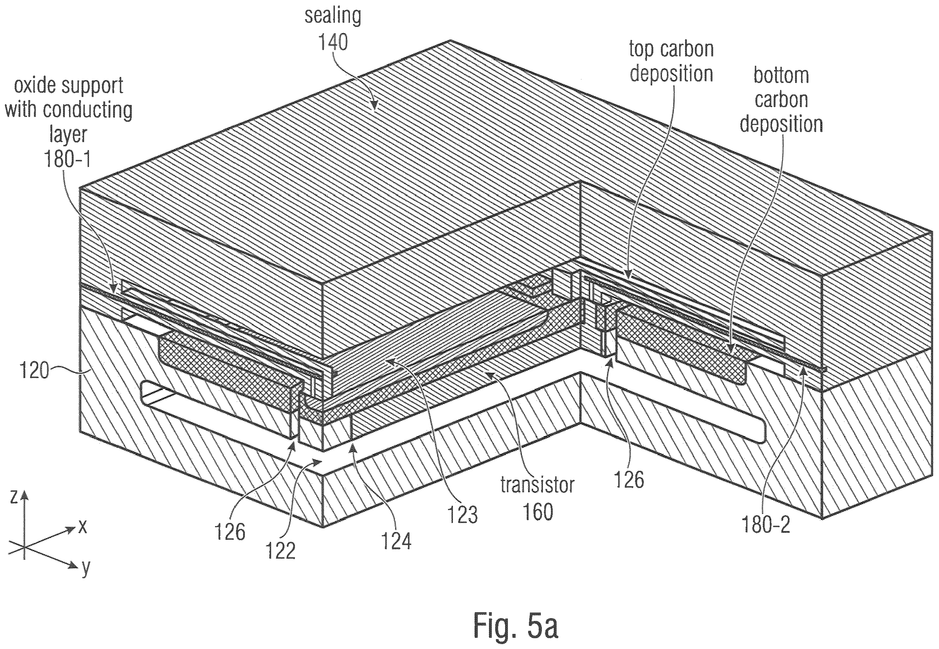

The second exemplary cut II exemplary shows the doping concentration through the gate region(s) 160-3 and the channel region 160-4 at a center region of the SON membrane element 124, i.e. through the active region (= across the channel 160-4) of the n JFET 160. In case of a n JFET 160, the source region 160-1 comprises a n-doping, the gate region(s) 160-3 comprises a p-doping and the drain region 160-2 comprises a n-doping. As described in Figs. 2a-c, the temperature sensing device 100 may have a transistor structure 160 in form of a BJT. According to further embodiments, the temperature sensing device 100 may have a transistor structure 160 in form of a JFET (as shown in Figs. 2d). Moreover, the temperature sensing device 100 may comprise a cantilever structure (see the cantilever structures 180 in Figs. 3a-c and 5a-b, for example). The cantilever structures are configured to provide a mechanical coupling between the SON membrane element 124 and the capping structure 140 for bearing or supporting the SON membrane element 124 with respect to the SON substrate 120.

The cantilever structure 180 may be formed by the semiconductor (e.g. silicon) material of the SON substrate 120 and the SON membrane element 124, respectively (see Figs. 3a-c below). I this case, the shape of the diffusions for the different transistor regions may be selected to (only) to form the transistor structure 160 in the middle part of the SON membrane element 124. The three diffusion regions 160-1, 160-2, 160-3 are only present in the SON membrane element 140 and not in the cantilever structure 180. The reason is to avoid a parasitic parallel transistor in the cantilever structure 180. Moreover, the cantilever structures 180 are cooler and have a smaller temperature variation, so a parallel BJT in these areas in undesirable. Thus, the transistor structure 160 is confined in the area of SON membrane element 140 with the maximal heating, for example.

The cantilever structure 180 may also be formed by the insulating (e.g. oxide) material of the capping substrate 140 (see Figs. 5a-b below). In this case, the diffusions regions 160-1, 160-2, 160-3 of the transistor structure 160 may essentially extend over the whole area of the SON membrane element 140 with a minimal spacing (step) from the trench structures 126 to prevent an unwanted charge carrier recombination which may otherwise result in undesired noise.

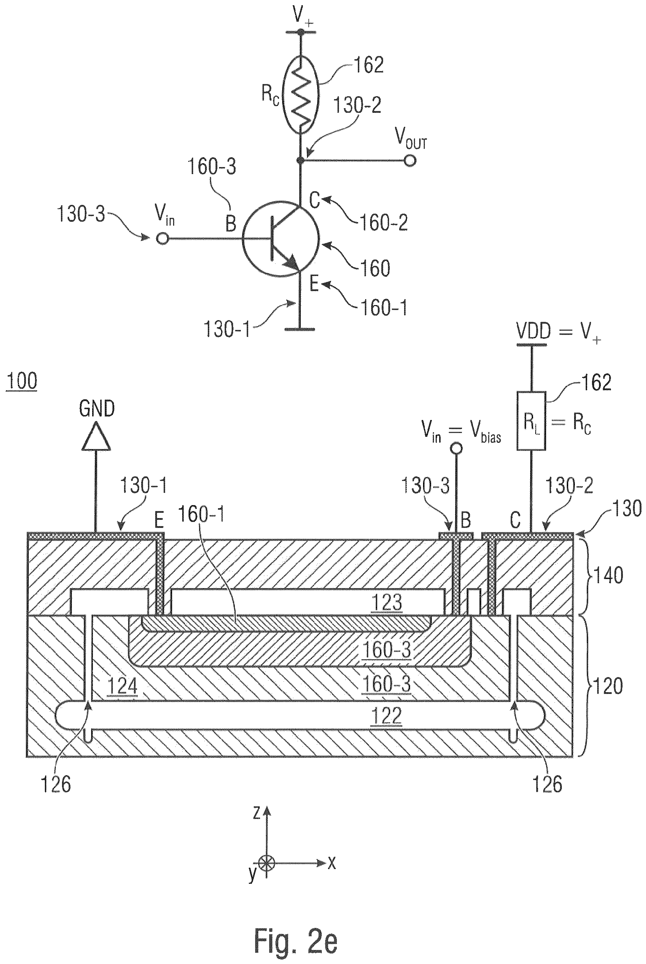

Fig. 2e shows a schematic cross-sectional view of a temperature sensing device 100 having an npn BJT 160 integrated in the semiconductor material of the SON membrane element 124, which is connected in a CE (common emitter) amplifier circuit together with an equivalence circuit diagram.

As shown in Fig. 2e, the transistor structure 160 (npn BJT) comprises a resistor element 162 (= R_{L}) as an external resistive load.

The common emitter amplifier circuit is typically used as a voltage amplifier. In this CE amplifier circuit, the base terminal 160-3 of the transistor structure serves as the input terminal, the collector region 160-2 as the output and the emitter region 160-1 is common to both, for example it may be tied to a ground reference or a power supply rail. Thus, the CE amplifier of Fig. 2e is implemented with a current load.

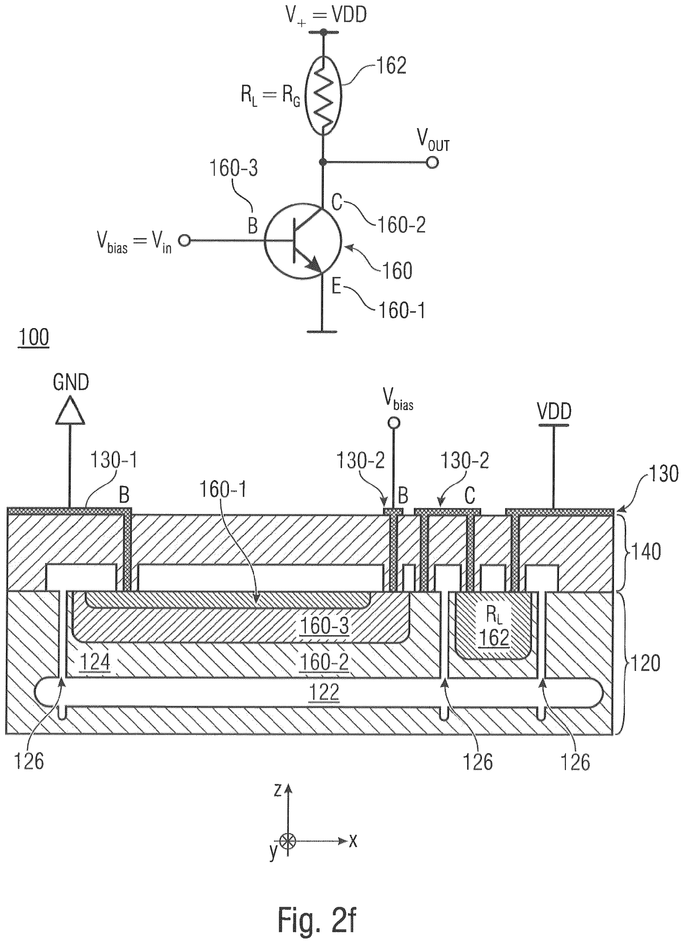

Fig. 2f shows a schematic cross-sectional view of a temperature sensing device 100 having an BJT 160 integrated in the semiconductor material of the SON membrane element 124, which is connected in a CE (common emitter) amplifier circuit together with an equivalence circuit diagram.

As shown in Fig. 2f, the transistor structure 160 (BJT) corresponds to the transistor structure 160 from Fig. 2e, wherein the CE amplifier circuit as shown in Fig. 2f further comprises an integrated resistor element 162, which may be implemented as a suspended resistor, which is integrated into the semiconductor material of the SON membrane element 124 (using, for example, the same SON technology).

The integrated resistor element 162 can be used to also change its resistance and enhance the whole sensitivity compared to a normal resistor (see Fig. 2f). Technically the suspended SON resistor 162 can be used as a separate bolometer.

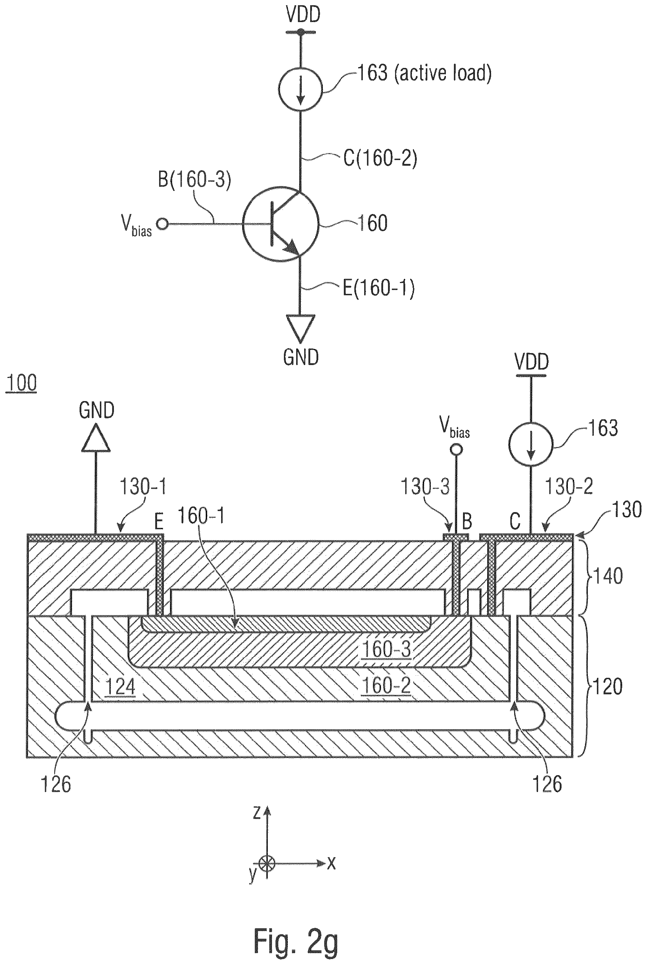

Fig. 2g shows a schematic cross-sectional view of a temperature sensing device 100 having an BJT 160 integrated in the semiconductor material of the SON membrane element 124, which is connected in a CE (common emitter) amplifier circuit together with an equivalence circuit diagram. As shown in Fig. 2g, the transistor structure 160 (BJT) corresponds to the transistor structure 160 from Fig. 2d, wherein the CE amplifier circuit as shown in Fig. 2g further comprises an active load (dynamic load) 163.

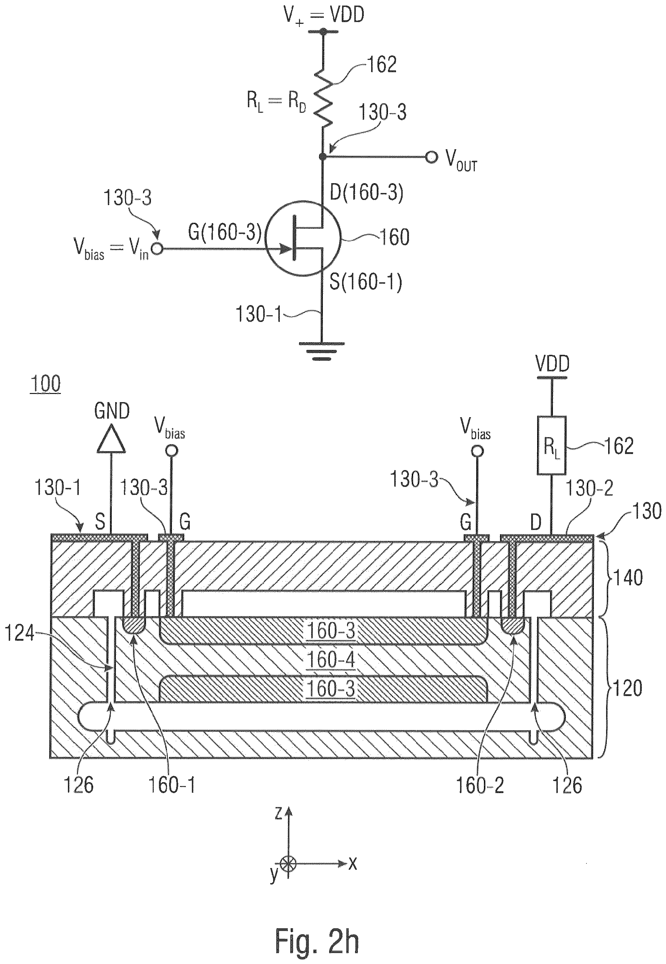

Fig. 2h shows a schematic cross-sectional view of a temperature sensing device 100 having an JFET 160 integrated in the semiconductor material of the SON membrane element 124, which is connected in a CS (common source) amplifier circuit together with an equivalence circuit diagram. As shown in Fig. 2h, the transistor structure 160 (JFET) comprises a resistor element 162 (= R_{L}) as an external resistive load.

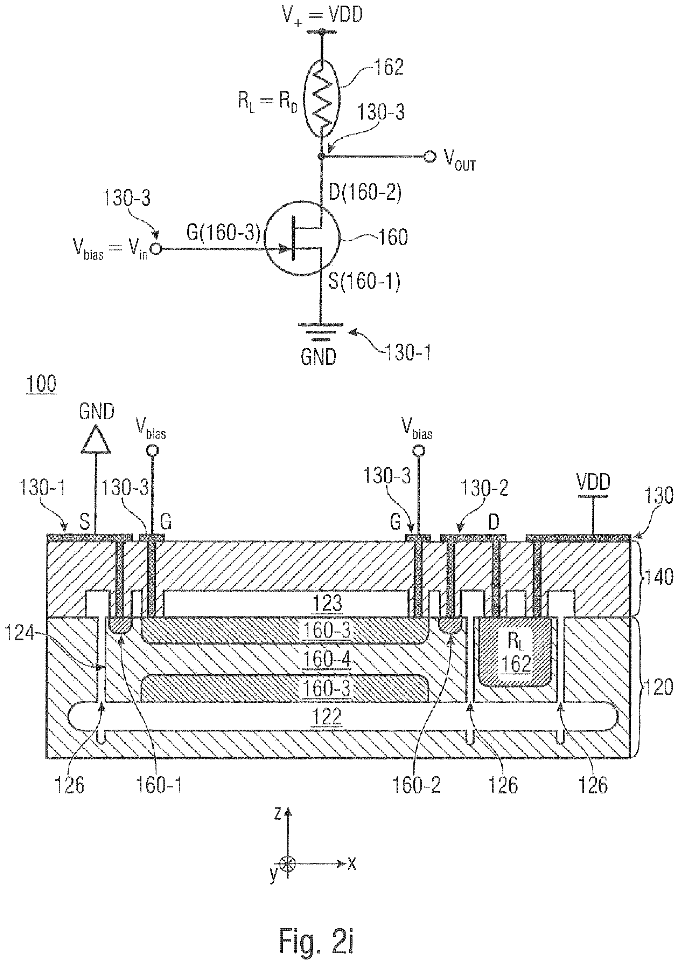

Fig. 2i shows a schematic cross-sectional view of a temperature sensing device 100 having a JFET 160 integrated in the semiconductor material of the SON membrane element 124, which is connected in a CS (common source) amplifier circuit together with an equivalence circuit diagram. As shown in Fig. 2i, the transistor structure 160 (JFET) corresponds to the transistor structure 160 from Fig. 2h, wherein the CS amplifier circuit as shown in Fig. 2i further comprises an integrated resistor element 162, which may be implemented as a suspended resistor, which is integrated into the semiconductor material of the SON membrane element 124 (using, for example, the same SON technology). The integrated resistor element 162 can be used to also change its resistance and enhance the whole sensitivity compared to a normal resistor (see Fig. 2h). Technically the suspended SON resistor 162 can be used as a separate bolometer.

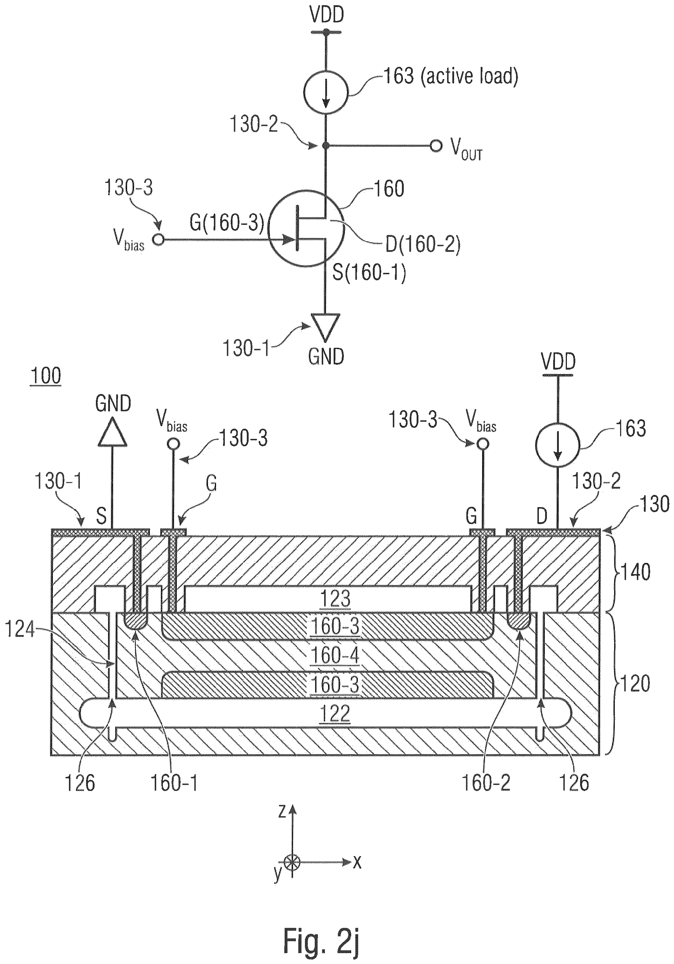

Fig. 2j shows a schematic cross-sectional view of a temperature sensing device 100 having an JFET 160 integrated in the semiconductor material of the SON membrane element 124, which is connected in a CS (common source) amplifier circuit together with an equivalence circuit diagram. As shown in Fig. 2j, the transistor structure 160 (JFET) corresponds to the transistor structure 160 from Fig. 2i, wherein the CE amplifier circuit as shown in Fig. 2j further comprises an active load (dynamic load) 163.

Figs. 3a-c now relate to the cantilever structure 180, which is configured to provide a mechanical coupling between the SON membrane element 124 and the capping structure 140 for bearing or supporting the SON membrane element 124 with respect to the SON substrate 120. As shown in Figs. 3a-c, the cantilever structure 180 may be formed by the semiconductor (e.g. silicon) material of the SON substrate 120 and the SON membrane element 124, respectively.

Fig. 3a shows a schematic plane view of the SON membrane element 124, which is separated by the trench structure 126 from the semiconductor material of the SON substrate 120. As shown in Fig. 3a, the cantilever structure 180 comprises two cantilever arms 180-1, 180-2 formed from the semiconductor material of the SON membrane element 124. Moreover, the emitter contact 130-1, collector contact 130-2 and base contact 130-3 are arranged on the respective portions of the cantilever structure 180, wherein the collector and base contacts 130-2, 130-3 are electrically isolated from each other.

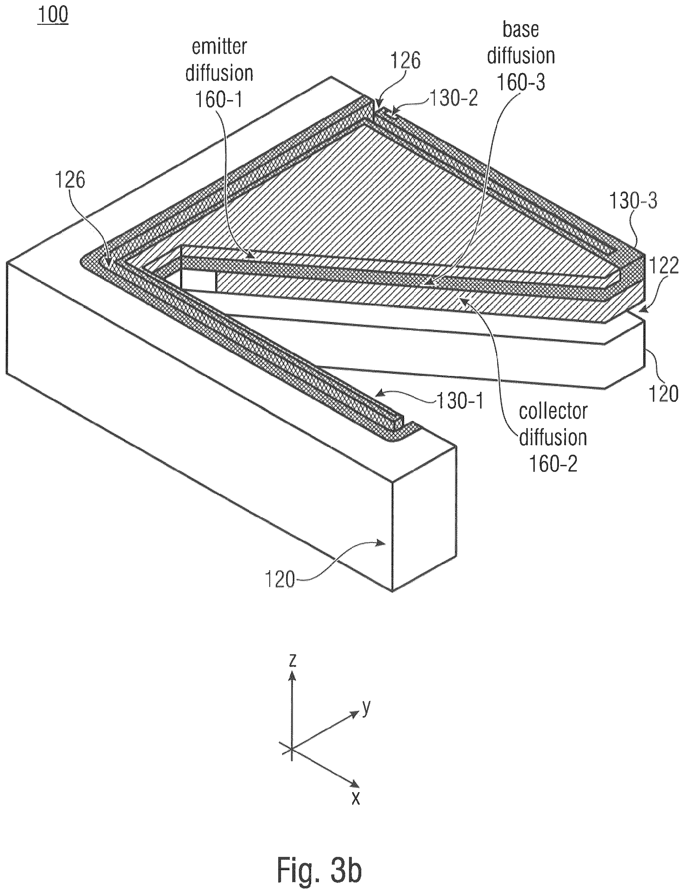

Figs. 3b-c show different top 3D partial cross-sectional views of the SON membrane element 120 and through the transistor structure 160 comprising the emitter, collector and base region 160-1, 160-2, 160-3.

As shown in Figs. 3a-c, the contact positions for providing the electrical and mechanical connection of the transistor regions 160-1, 160-2, 160-3 with the contact structure in the capping structure 140 are location at the "free ends" of the cantilever arms 180-1, 180-2 for providing the mechanical coupling/bonding between the SON membrane element 124 and the capping structure 140 (lid) for bearing/supporting the SON membrane element 124 with respect to the SON substrate 120 of the temperature sensing device 100.

Thus, the cantilever structure 180 provides together with the SON cavity 122 a thermal and/or electrical insulation of the semiconductor material of the SON membrane element 124 from the semiconductor material of the surrounding SON substrate 120. Furthermore, the thermal and/or mechanical decoupling further provides a mechanical stress decoupling of the semiconductor material of the SON membrane element 124 from the surrounding semiconductor material of the SON substrate 120.

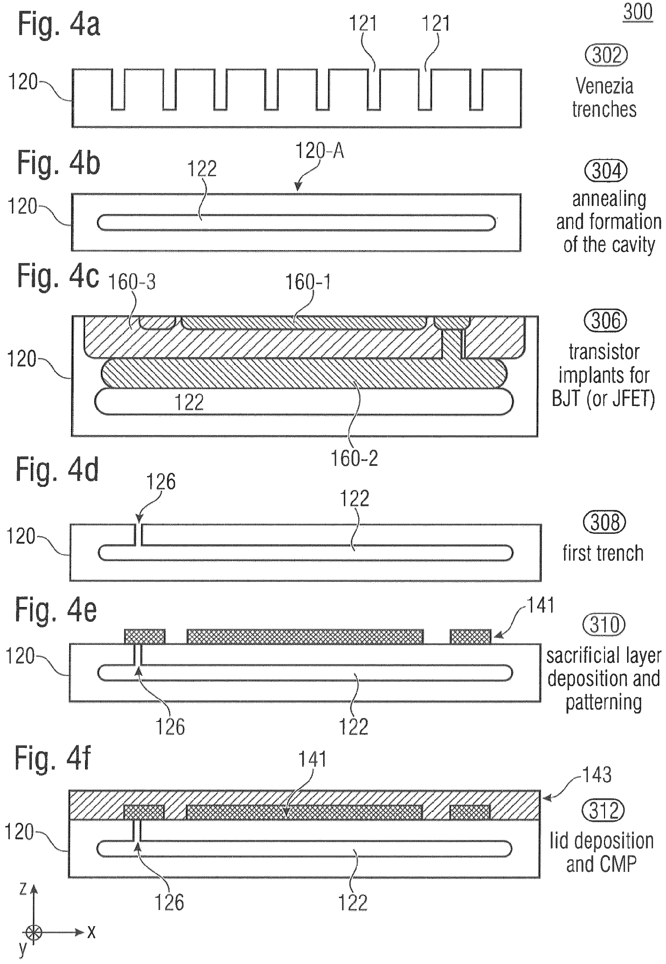

In the following, Figs. 4a - 4o show schematic cross-sectional views ("schematic snapshots") of a semiconductor substrate and the manufacturing of the temperature sensor device 100 at different stages of the method for manufacturing the temperature sensing device 100 having a silicon cantilever suspension according to an embodiment.

Thus, Figs. 4a - 4o show an exemplary process flow or flowchart of the method 300 for manufacturing the temperature sensing device 100 having a silicon cantilever suspension according to an embodiment.

The method 300 comprises the step 302 of forming Venezia trenches 121 in a semiconductor substrate 120. In step 304, the semiconductor substrate 120 is annealed to form the SON substrate 120 having the SON cavity 122 in the semiconductor material. According to an embodiment, the forming of the cavity 122 comprises a silicon-on-nothing or a Venezia process (process I) comprising forming the trenches or openings 121 in the semiconductor substrate 121, wherein, during annealing the semiconductor substrate 120, the openings 121 are connected at the bottom of the openings to form the cavity 122 and are closed above the cavity 122.

In step 306, the transistor structure 160, e.g. a BJT or JFET, is integrated, e.g. by means of implantation, in the semiconductor material of the SON membrane element 124, wherein the transistor structure 160 comprises the first transistor region 160-1 (first terminal), the second transistor region 160-2 (second terminal), both having a first doping type, and the third transistor region 160-3 (control region) having a complementary, second doping type.

Thus, the transistor region 160-1, 160-2, 160-3 are doped by ion implantation, for example, wherein exemplary p-type doping materials (dopants) may comprise boron, aluminum, gallium, indium, etc., and exemplary n-type doping materials (dopants) may comprise phosphorous, arsenic, antimony, bismuth, lithium, etc. Moreover, an annealing step (heat treatment) may be conducted, for example, in order to activate and localize the doping materials within semiconductor substrate 120.

In case of a BJT 160, the semiconductor material of the SON substrate 120 may comprise a basic (initial) p-type doping with a p-doping concentration in the range between 10¹⁵ cm⁻³ and 10¹⁸ cm³. The emitter region may comprise a p+-type doping concentration in the range between 10¹⁹ cm⁻³ and 1x10²¹ cm⁻³. The n-type base region (third transistor region) 160-3 may comprise a doping concentration in the range of 10¹⁷ cm⁻³ and 1x10²¹ cm⁻³. The collector region 160-2 (second transistor region) of the bipolar junction transistor 160 may comprise a p+-type doping concentration in the range between 10¹⁷ cm⁻³ and 1x10²¹ cm⁻³.

In case of a n-channel JFET 160, the source region 160-1 may comprise a (maximum) n+-type doping concentration in the range between 10¹⁷ cm⁻³ and 1x10²¹ cm⁻³. The p-type gate region(s) 160-3 may comprise a (maximum) doping concentration in the range of 10¹⁷ cm⁻³ and 1x10²¹ cm⁻³, and the drain region 160-2 may comprise a (maximum) n+-type doping concentration in the range between 10¹⁷ cm⁻³ and 1x10²¹ cm⁻³. The channel region 160-4 may be formed either by the background doping or by a channel implant ranging between 10¹⁵ cm⁻³ and 1x10²¹ cm⁻³.

With regard to the above-described specifications for the doping types and doping concentrations of the different regions of the semiconductor substrate 120, it should be noted that complementary doping types may be utilized in accordance to embodiments.

In order to facilitate the further description of the different process steps and to emphasize the fabricated elements, a representation of the implanted regions of the transistor structure 160 is omitted in the illustration of the further process steps (Figs. 4d - 4o).

In step 308, a first part of the trench structure 126 is formed by a first trench forming process step. The first part of the trench structure 126 extends from the first main surface region 120-A from the SON substrate 120 to the SON cavity 122.

In step 310, a first insulating material 141, e.g. carbon, as a sacrificial material, is deposited, e.g., by a CVD process, on the first main surface region 120-A of the SON substrate 120 and, further, structured or patterned for exposing contact regions 130-1, 130-2, 130-3 of the transistor structure 160, e.g. the first, second and third transistor regions 160-1, 160-2, 160-3.

In step 312, a further insulating material 143, e.g. an oxide material, is deposited, e.g., by a CVD process, on the "processing surface", e.g. the deposited carbon layer 141 and the exposed regions of the semiconductor material of the SON membrane element 124 and the semiconductor substrate 120. Further, a CMP step (CMP = chemical mechanical polishing/planarization) is conducted to provide a plane surface region of the deposited oxide material (further insulation material). The planarized insulating material 143 forms a part of the capping (or lid) structure 140 of the temperature sensing device 100.

In step 314, a second part of the trench structure 126 is conducted for providing the trench structure 126, which laterally borders/confines the SON membrane element 124 with respect to the laterally surrounding semiconductor material of the SON substrate 120. The first and second partial trenches, which form the trench structure 126, extend from the first main surface region 120-A of the SON substrate 120 to the SON cavity 122. As the insulator stack 141, 143, comprising the first and second insulation material 141, 143 (the carbon material and the oxide material) on the first partial trench, the SON membrane element 124 is held into position with respect to the SON substrate 120.

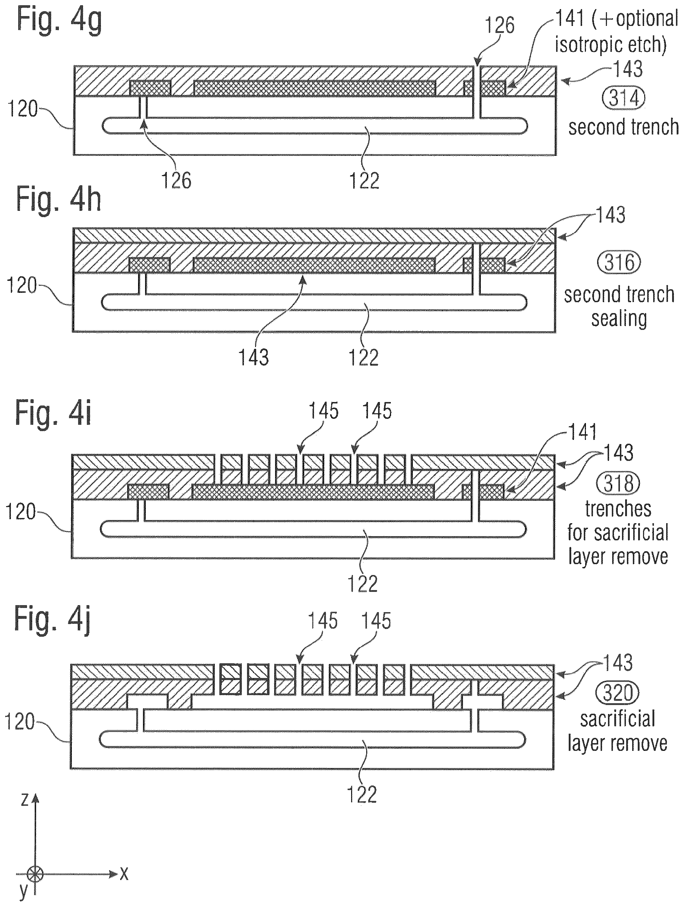

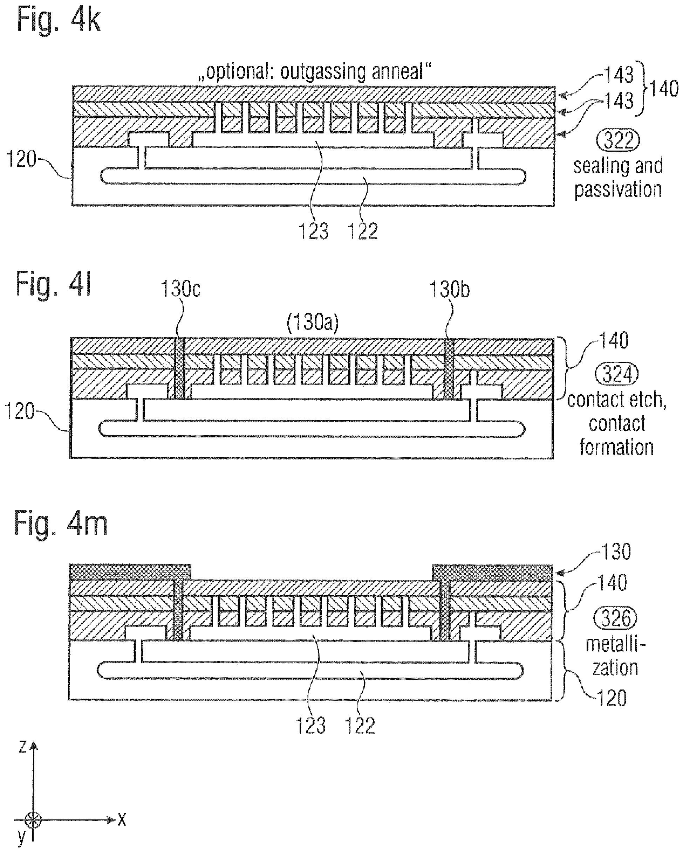

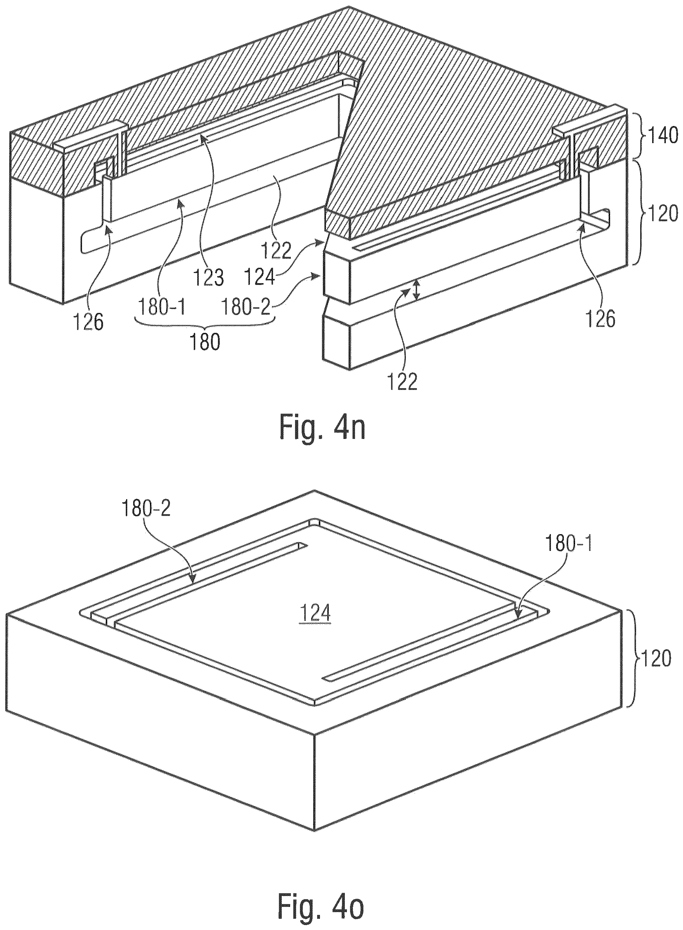

In an optional step (not shown in Fig. 4), an isotropic etching can be performed to widen the trenches 126 and therefore increase the width h₁₂₂ of the bottom cavity 122 and the trench structure 126.

In step 316, a further (oxide) deposition of an insulating material, e.g. the second insulating material 143, is conducted to the processing surface, i.e. in step 316 on the second insulation material layer 143 (oxide layer) for closing and sealing the second partial trench structure.

In step 318, access holes or access trenches 145 are formed (e.g. etched) in the second insulation material layer 143 for achieving access openings to the first insulation material layers 141 (sacrificial carbon layer) as deposited in steps 310 and 322. The at least one release opening 145 provides an access path for an etchant to the sacrificial structures 141.

In step 320, the first insulation material layer 141 (sacrificial carbon layer) is removed through the access openings145 for achieving the cavity 123 and for releasing the cantilever structure 180. Thus, the remaining second insulation material which is mechanically connected to the SON membrane 124 forms the mechanical connection to the cantilever structure 180 of the SON membrane element 124.

Before conducting step 322, an (optional) outgassing anneal can be applied to remove the trapped gas in the already deposited films.

In step 322, a sealing material, e.g. the second insulation material 143 (e.g. an oxide material) is deposited, e.g., by a CVD process, on the momentary processing surface, e.g. at a high temperature and with low pressure. In an optional step (not shown in Fig. 4 and following to step 322), a passivation layer may be applied to the temperature sensing device 100 as a final protection layer.

In step 324, via holes may be formed in the second insulating (e.g. oxide) material layer 143 and filled with a conducting material for providing the conducting vias 130a, 130b, 130c from the respective transistor regions 160-1, 160-2 and/or 160-3 to the surface of the second insulation material layer (oxide layer) 143. Moreover, a structured conductive layer comprising poly silicon (poly deposition), silicides (TiSi, CoSi) or e.g. metals (for a metallization), such as W, Ti, Co, Al, may be deposited to form the contact regions 130-1, 130-2, 130-3 in electrical contact to the conductive vias 130a, 130b, 130c.

In an optional step (pad open process), the contact pads 130-1, 130-2, 130-3 are opened, e.g. by an etch step, to provide the accessible contact pads130-1, 130-2, 130-3.

In step 326, a structured conductive layer comprising poly silicon (poly deposition), silicides (TiSi, CoSi) or e.g. metals (for a metallization), such as W, Ti, Co, Al. The conductive layer 130 may be deposited to form a metallization structure on the temperature sensing device 100.

The step 322 of depositing a sealing material, e.g. the second insulation material 143, may comprise a deposition of the second isolation layer 143 with a CVD process (CVD = chemical vapor deposition) or a HDP-CVD process (HDP = high density plasma) on the previously applied second insulation material 143 for sealing the cavity 123 (and the cavity 122 fluidically connected by the trench structure 126 to the cavity 123) under low pressure or near vacuum, wherein the low pressure in the cavity 123 corresponds to the process pressure of the CVD process or HDP-CVD process so that the hermetically sealed cavity 123 is formed between the SON membrane 124 and the opposing capping structure 140 which is formed by the second isolation material layer 143.

The second isolation layer 143 may comprise a silicon oxide or silicon nitride material. Moreover, the CVD process or HDP-CVD process may comprise a process pressure of e.g., between 0.1 and 30 mTor, between 0.5 and 10 mTor or between 1 and 3 mTor.

Thus, the remaining second insulation material which is mechanically connected to the SON membrane 124 forms the mechanical connection to the silicon cantilever suspension having the cantilever structure 180 of the SON membrane element 124.

For a spectrometer application, an optical filter element 190, e.g. in form of a filter stack, is deposited on top of the capping structure 140 and may be used for spectrometer and/or gas sensing applications. Finally, further contact pads may be opened.

Thus, Fig. 4m (after step 326) shows a schematic cross-sectional view of the temperature sensing device 100 with the SON membrane element 124 having the silicon cantilever suspension 180 comprising two cantilever arms 180-1, 180-2 formed from the semiconductor material of the SON membrane element 124 according to an embodiment.

Moreover, Figs. 4n and 4o show 3D cross-sectional views of the resulting temperature sensing device 100 having silicon cantilever suspension 180 comprising two cantilever arms 180-1, 180-2 formed from the semiconductor material of the SON membrane element 124 according to an embodiment, wherein a representation of the implanted regions of the transistor structure 160 is omitted.

Figs. 5a-b show 3D cross-sectional views of the temperature sensing device 100 with the SON BJT 160 having an insulator (e.g. oxide) cantilever suspension 180 according to an embodiment.

Figs. 5a-b now relate to the cantilever structure 180, which is configured to provide a mechanical coupling between the SON membrane element 124 and the capping structure 140 for bearing or supporting the SON membrane element 124 with respect to the SON substrate 120. As shown in Figs. 5a-b, the cantilever structure 180 may be formed by the insulating (e.g. oxide) material of the capping substrate 140.

Fig. 5a-b show different top 3D partial cross-sectional views of the semiconductor device 100 and, especially, through the capping structure 140, the SON membrane element 120 and through the transistor structure 160 comprising the emitter, collector and base region 160-1, 160-2, 160-3.

Fig. 5a shows a top 3D partial cross-sectional view of the capping structure 140, the SON membrane element 120 and through the transistor structure 160 comprising the emitter, collector and base region 160-1, 160-2, 160-3. The SON membrane element 124 is separated by the trench structure 126 from the semiconductor material of the SON substrate 120.

The capping (or lid) structure 140 for covering the SON membrane element 124 and for mechanically holding the SON membrane element 124 into position with respect to the SON substrate 120 comprises the second insulating material (e.g. oxide) 143. The capping structure 140 is provided for sealing the cavity 123 for the SON membrane element 124 and also the cavity 122 fluidically connected by the trench structure 126 to the cavity 123, wherein the SON membrane element 124 is suspended in the sealed cavity 123. The cantilever structure 180 comprises two cantilever arms 180-1, 180-2 formed from the insulating material of the capping structure 140.

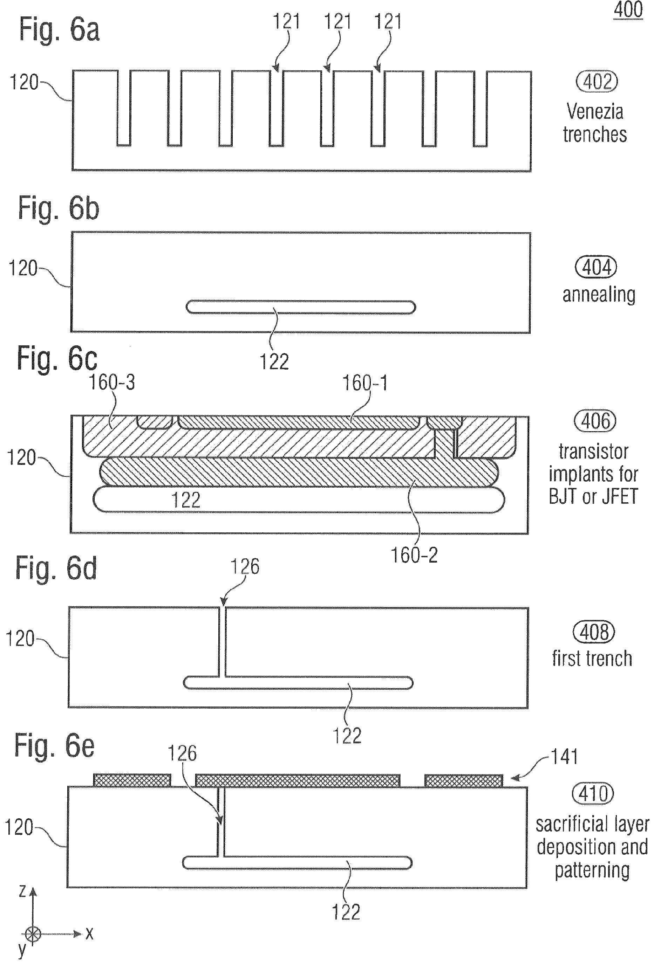

Based on the above process (integration scheme) 300 for manufacturing of the temperature sensor device 100 having an insulator (e.g. oxide) cantilever suspension as shown in Figs. 6a - 6o below, two sacrificial layers (see steps 410 and 422) are used to create the suspended cantilever structure 180. Typically for silicon the suspended beam 180 is between the carbon layer and the Venezia structure. To get a suspended dielectric film cantilever 180, an approach is to deposit the cantilever films 180 in carbon material (sacrificial material - see step 410) and then deposit another carbon material (see step 422) so that later the carbon material can be remove from top and bottom of the deposited cantilever structure 180, thus releasing cantilever structure 180, so that the cantilevers 180 are suspended in air. The bottom carbon material refers to the sacrificial deposition (step 410) below the dielectric cantilever 180 and the top carbon material refers to the sacrificial deposition (step 422) on the dielectric cantilever 180.

According to a further approach to get a suspended dielectric film cantilever 180 (not shown) is to deposit the cantilever films 180 on silicon and then under-etch the deposited cantilever films 180. This process needs only a single carbon deposition and a Venezia process.

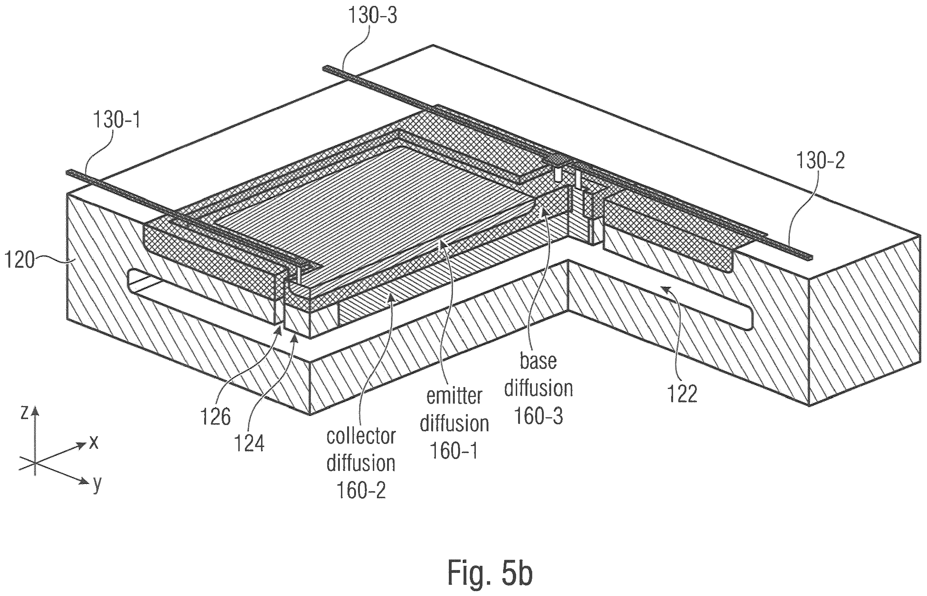

Fig. 5b shows a schematic 3D partial cross-sectional view of the SON membrane element 124, which is separated by the trench structure 126 from the semiconductor material of the SON substrate 120. Moreover, the emitter contact 130-1, collector contact 130-2 and base contact 130-3 are arranged on the respective portions of the cantilever structure 180, wherein the emitter, collector and base contacts 130-1 130-2, 130-3 are electrically isolated from each other.

As shown in Figs. 5b, the contact positions for providing the electrical and mechanical connection of the transistor regions 160-1, 160-2, 160-3 with the contact structure in the capping structure 140 are location at the "free ends" of the cantilever arms 180-1, 180-2 for providing the mechanical coupling/bonding between the SON membrane element 124 and the capping structure 140 (lid) for bearing/supporting the SON membrane element 124 with respect to the SON substrate 120 of the temperature sensing device 100.

Thus, the cantilever structure 180 provides together with the SON cavity 122 a thermal and/or electrical insulation of the semiconductor material of the SON membrane element 124 from the semiconductor material of the surrounding SON substrate 120. Furthermore, the thermal and/or mechanical decoupling further provides a mechanical stress decoupling of the semiconductor material of the SON membrane element 124 from the surrounding semiconductor material of the SON substrate 120.

Figs. 6a-q show schematic cross-sectional views ("schematic snapshots") of a SON substrate 120 and the manufacturing of a temperature sensing device 100 at different stages of the method for manufacturing the temperature sensing device 100 with a SON BJT having an insulator (oxide) cantilever suspension 180 according to an embodiment.

The method 400 comprises the step 402 of forming Venezia trenches 121 in a semiconductor substrate 120. In step 404, the semiconductor substrate 120 is annealed to form the SON substrate 120 having the SON cavity 122 in the semiconductor material. According to an embodiment, the forming of the cavity 122 comprises a silicon-on-nothing or a Venezia process (process I) comprising forming the trenches or openings 121 in the semiconductor substrate 121, wherein, during annealing the semiconductor substrate 120, the openings 121 are connected at the bottom of the openings to form the cavity 122 and are closed above the cavity 122.

In step 406, the transistor structure 160, e.g. a BJT or JFET, is integrated, e.g. by means of implantation, in the semiconductor material of the SON membrane element 124, wherein the transistor structure 160 comprises the first transistor region 160-1 (first terminal), the second transistor region 160-2 (second terminal), both having a first doping type, and the third transistor region 160-3 (control region) having a complementary, second doping type.

Thus, the transistor region 160-1, 160-2, 160-3 are doped by ion implantation, for example, wherein exemplary p-type doping materials (dopants) may comprise boron, aluminum, gallium, indium, etc., and exemplary n-type doping materials (dopants) may comprise phosphorous, arsenic, antimony, bismuth, lithium, etc. Moreover, an annealing step (heat treatment) may be conducted, for example, in order to activate and localize the doping materials within semiconductor substrate 120.

In case of a BJT 160, the semiconductor material of the SON substrate 120 may comprise a basic (initial) p-type doping with a p-doping concentration in the range between 10¹⁵ cm⁻³ and 10¹⁸ cm³. The emitter region may comprise a p+-type doping concentration in the range between 10¹⁹ cm⁻³ and 5x10²⁰ cm⁻³. The n-type base region (third transistor region) 160-3 may comprise a doping concentration in the range of 10¹⁹ cm⁻³ and 5x10²⁰ cm⁻³. The collector region 160-2 (second transistor region) of the bipolar junction transistor 160 may comprise a p+-type doping concentration in the range between 10¹⁹ cm⁻³ and 5x10²⁰ cm⁻³.

In case of a n-channel JFET 160, the source region 160-1 may comprise a (maximum) n+-type doping concentration in the range between 10¹⁷ cm⁻³ and 1x10²¹ cm⁻³. The p-type gate region(s) 160-3 may comprise a (maximum) doping concentration in the range of 10¹⁷ cm⁻³ and 1x10²¹ cm⁻³, and the drain region 160-2 may comprise a (maximum) n+-type doping concentration in the range between 10¹⁷ cm⁻³ and 1x10²¹ cm⁻³. The channel region 160-4 may be formed either by the background doping or by a channel implant ranging between 10¹⁵ cm⁻³ and 1x10²¹ cm⁻³.

With regard to the above-described specifications for the doping types and doping concentrations of the different regions of the semiconductor substrate 120, it should be noted that complementary doping types may be utilized in accordance to embodiments.

In order to facilitate the further description of the different process steps and to emphasize the fabricated elements, a representation of the implanted regions of the transistor structure 160 is omitted in the illustration of the further process steps (Figs. 6d - 4q).

In step 408, a first part of the trench structure 126 is formed by a first trench forming process step. The first part of the trench structure 126 extends from the first main surface region 120-A from the SON substrate 120 to the SON cavity 122.

In step 410, a first insulating material 141, e.g. carbon, as a sacrificial material, is deposited, e.g., by a CVD process, on the first main surface region 120-A of the SON substrate 120 and, further, structured for exposing contact regions of the transistor structure 160, e.g. the first, second and third transistor regions 160-1, 160-2, 160-3.

In step 412, a further insulating material 143, e.g. an oxide material, is deposited, e.g., by a CVD process, on the "processing surface", e.g. the deposited carbon layer 141 and the exposed regions of the semiconductor material of the SON membrane element 124 and the semiconductor substrate 120. Further, a CMP step (CMP = chemical mechanical polishing/planarization) is conducted to provide a plane surface region of the deposited oxide material (further insulation material) 143 and the first insulating material 141 (sacrificial layer).

In step 414, a second part of the trench structure 126 is formed for providing the trench structure 126, which laterally borders/confines the SON membrane element 124 with respect to the laterally surrounding semiconductor material of the SON substrate 120. The first partial trench extends from the first main surface region 120-A of the SON substrate 120 to the SON cavity 122, wherein the second partial trench extends through the insulator stack 141, 143 (comprising the first and second insulation material 141, 143) and through the SON substrate 120 to the SON cavity 122. As the insulator stack 141, 143, comprising the first and second insulation material 141, 143 (the carbon material and the oxide material) on the first partial trench, the SON membrane element 124 is held into position with respect to the SON substrate 120.

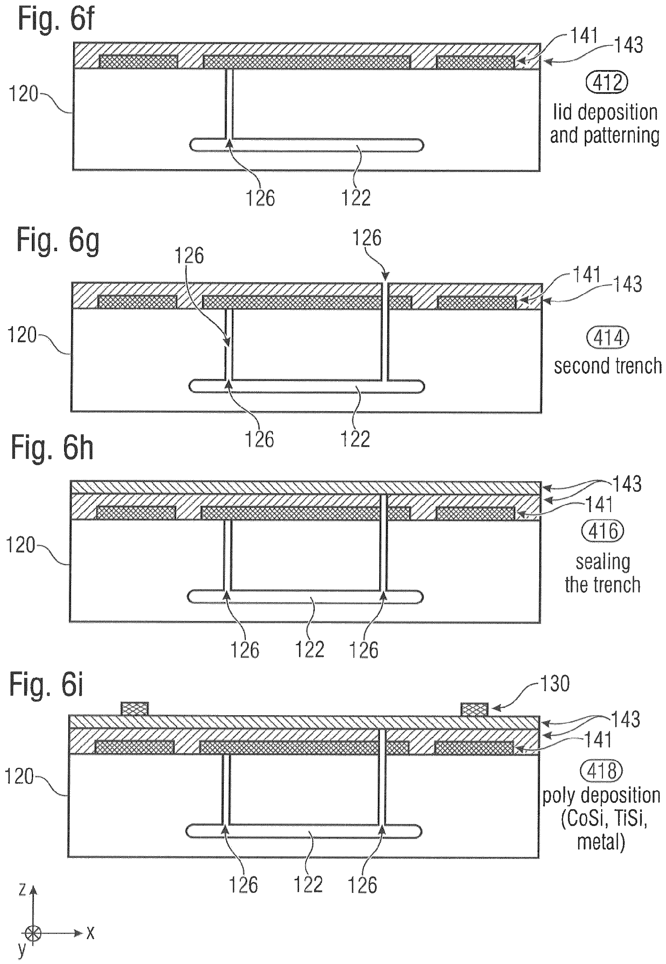

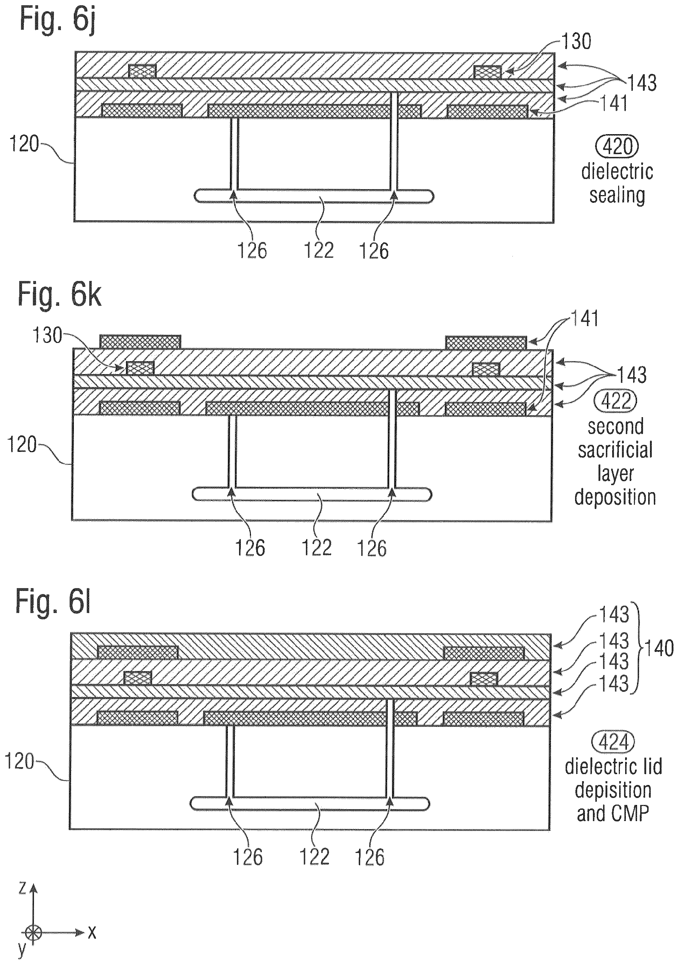

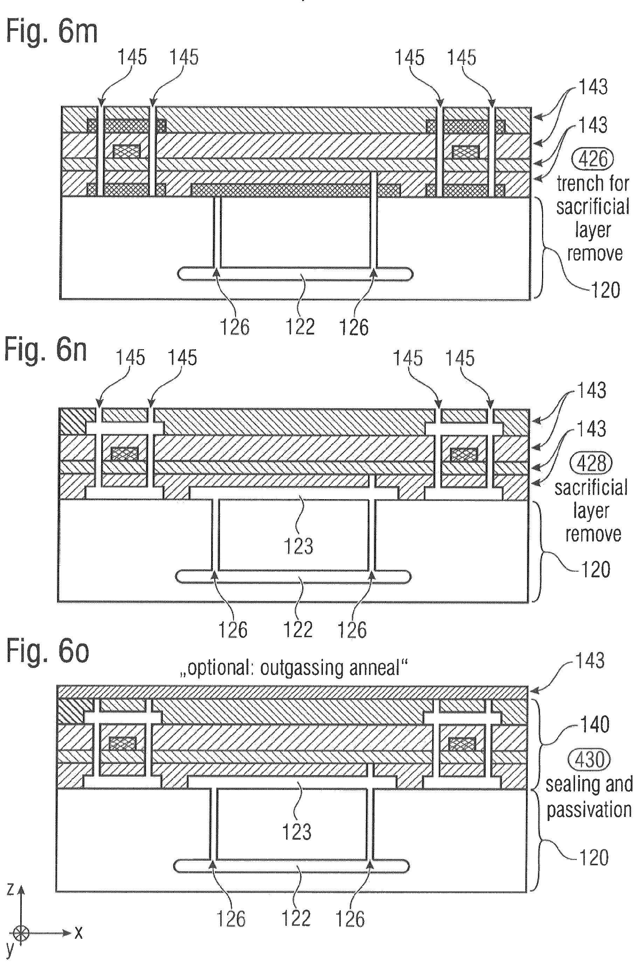

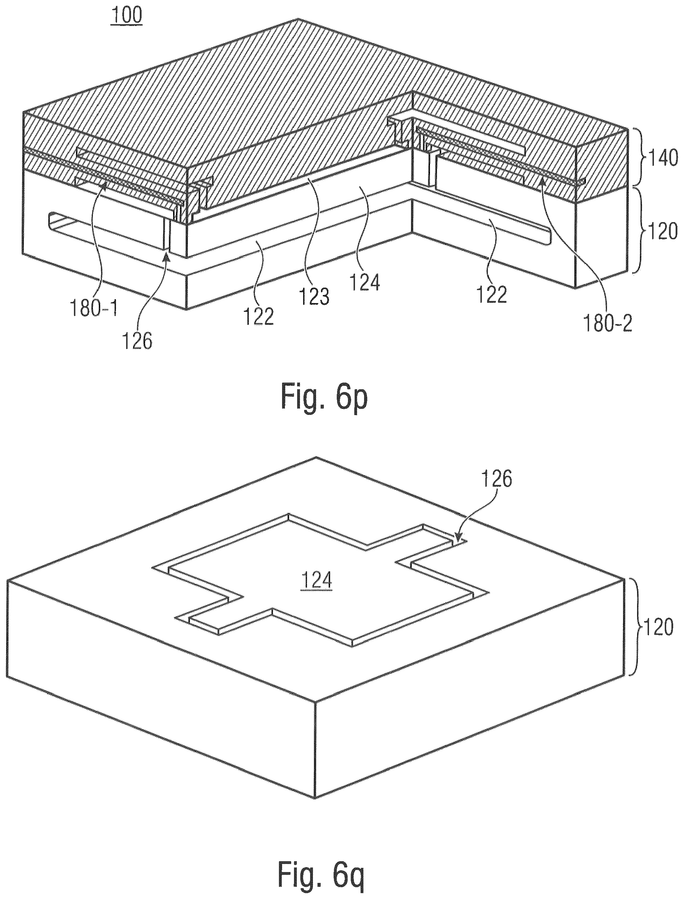

In an optional step (not shown in Fig. 6), an isotropic etching can be performed to widen the trenches 126 and therefore increase the width h₁₂₂ of the bottom cavity 122 and the trench structure 126.

In step 416, a further (oxide) deposition of an insulating material, e.g. the second insulating material 143, is conducted to the processing surface, i.e. in step 416 on the second insulation material layer 143 (oxide layer) for closing and sealing the second partial trench structure.

In step 418, via holes (not shown in Fig. 4) may be formed in the second insulating (e.g. oxide) material layer 143 filled with a conducting material for providing the conducting vias 130a, 130b, 130c from the respective transistor regions 160-1, 160-2 and/or 160-3 to the surface of the second insulation material layer (oxide layer) 143.

Moreover, a structured conductive layer 130 of the resulting sandwich structure is applied and may comprise poly silicon (poly deposition), silicides (TiSi, CoSi) or metals, such as W, Ti, Co, Al. The conductive layer 130 may be formed on the second insulation material layer 143 in electrical contact to the conductive vias 130a, 130b, 130c, wherein the conductive layer is structured for providing contact pads 130-1,130-2, 130-3 for the different transistor regions 160-1, 160-2 and/or 160-3 of the transistor structure 160.

In step 420, a further insulating (= dielectric) material 143, e.g. an oxide material, is deposited, e.g., by a CVD process, on the "processing surface", e.g. on the structured conductive layer 130 and the exposed regions of the insulating material 143 (deposited in step 418), for sealing the structured conductive layer 130, i.e. for providing a dielectric seal. Further, a CMP step (CMP = chemical mechanical polishing/planarization) may be optionally conducted to provide a plane surface region of the deposited oxide material (= further insulation material 143). The further insulating material 143 forms a part of the capping (or lid) structure 140 of the temperature sensing device 100.

In step 422, the first insulating material 141, e.g. carbon, as a sacrificial material, is deposited, e.g., by a CVD process, on the further insulating material 143 (deposited in step 320) and structured.

In step 424, a sealing material, e.g. the second insulation material 143 (e.g. an oxide material) is deposited on the momentary processing surface, e.g. on the structured first insulating material 141 (e.g. carbon, as a sacrificial material) and the exposed regions of the insulating material 143 (deposited in step 422), for sealing the s sacrificial material layer. Further, a CMP step (CMP = chemical mechanical polishing/planarization) may be conducted to provide a plane surface region of the deposited oxide material (= the further insulation material). The further insulating material 143 forms a part of the capping (or lid) structure 140 of the temperature sensing device 100.

In step 426, access holes or access trenches 145 are formed (e.g. etched) in the second insulation material layer 143 for achieving access openings to the first insulation material layers 141 (sacrificial carbon layer) as deposited in steps 410 and 422. The at least one release opening 145 provides an access path for an etchant to the sacrificial structures 141.

In step 428, the first insulation material layer 141 (sacrificial carbon layer) is removed through the access openings145 for achieving the cavity 123 and for releasing the cantilever structure 180. Thus, the remaining second insulation material which is mechanically connected to the SON membrane 124 forms the mechanical connection to the cantilever structure 180 of the SON membrane element 124.

Before conducting step 430, an (optional) outgassing anneal can be applied to remove the trapped gas in the already deposited films.

In step 430, a sealing material, e.g. the second insulation material 143 (e.g. an oxide material) is deposited on the momentary processing surface, e.g. at a high temperature and with low pressure, for closing and sealing the access holes or trenches 145. Thus, sealing material 143 forms a part of the capping (or lid) structure 140 of the temperature sensing device 100.

The step 430 of forming the sealing material 143 may comprise a deposition of the second isolation layer 143 with a CVD process (CVD = chemical vapor deposition) or a HDP-CVD process (HDP = high density plasma) on the previously applied second insulation material 143 for sealing the cavity 123 (and the cavity 122 fluidically connected by the trench structure 126 to the cavity 123) under low pressure or near vacuum, wherein the low pressure in the cavity 123 corresponds to the process pressure of the CVD process or HDP-CVD process so that the hermetically sealed cavity 123 is formed between the SON membrane 124 and the opposing capping structure 140 which is formed by the second isolation material layer 143.

The second isolation layer 143 may comprise a silicon oxide or silicon nitride material. Moreover, the CVD process or HDP-CVD process may comprise a process pressure of e.g., between 0.1 and 30 mTor, between 0.5 and 10 mTor or between 1 and 3 mTor.

In an optional step (not shown in Fig. 6 and following to step 430), a passivation layer may be applied to the temperature sensing device 100 as a final protection layer.

In an optional step (not shown in Fig. 6 = a pad open process), the contact pads 130-1, 130-2, 130-3 may be opened, e.g. by an etch step, to provide the accessible contact pads130-1, 130-2, 130-3.

Moreover, according to a further (optional) process step a structured conductive layer comprising poly silicon (poly deposition), silicides (TiSi, CoSi) or e.g. metals (for a metallization), such as W (tungsten), Ti (titanium), Co (copper), Al (aluminum). The conductive layer 130 may form contact regions (pads) or conductive traces 132a, 132b, 133c in electrical contact to the conductive vias 130a, 130b, 130c for the different transistor regions 160-1, 160-2 and/or 160-3 of the transistor structure 160 and/or a metallization structure on the temperature sensing device 100.

As the contact regions are out of plane with respect to the representation of the process step, the contact regions are not explicitly shown in Figs. 6a-o.

For a spectrometer application, an optical filter element 190, e.g. in form of a filter stack, is deposited on top of the capping structure 140 and may be used for spectrometer and/or gas sensing applications. Finally, further contact pads may be opened.

Thus, Fig. 6o (after step 430) shows a schematic cross-sectional view of the temperature sensing device 100 with the SON membrane element 124 having the an insulator (e.g. oxide) cantilever suspension 180 according to an embodiment.

Moreover, Figs. 6p and 6q show 3D cross-sectional views of the resulting temperature sensing device 100 having an insulator (e.g. oxide) cantilever suspension 180 according to an embodiment, wherein a representation of the implanted regions of the transistor structure 160 is omitted.

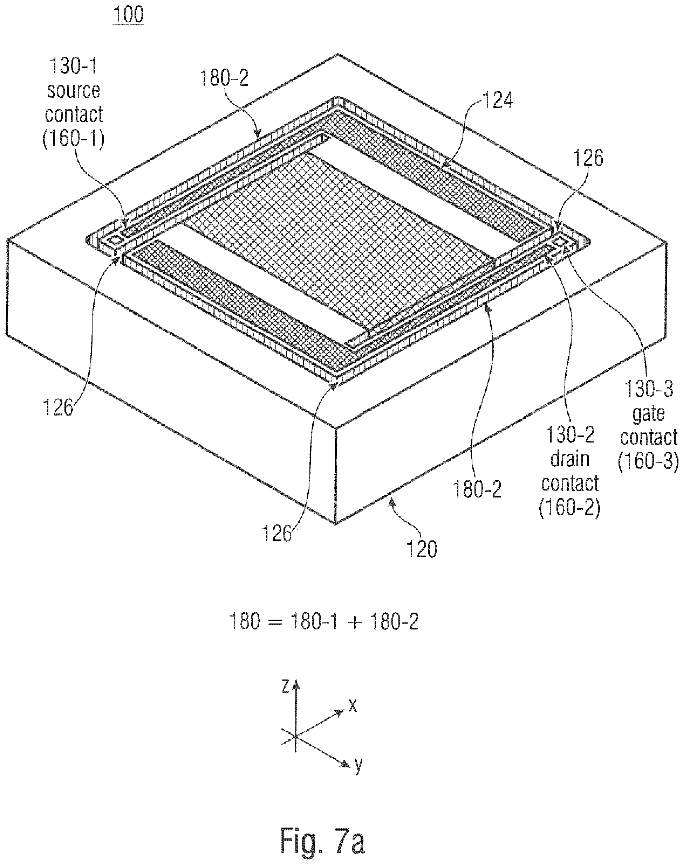

Fig. 7a shows a schematic top 3D plane view of a temperature sensing device 100 with a JFET 160 having a silicon cantilever suspension 180 according to an embodiment.

Figs. 7a-c now relate to the cantilever structure 180, which is configured to provide a mechanical coupling between the SON membrane element 124 and the capping structure 140 for bearing or supporting the SON membrane element 124 with respect to the SON substrate 120. As shown in Figs. 7a-c, the cantilever structure 180 may be formed by the semiconductor (e.g. silicon) material of the SON substrate 120 and the SON membrane element 124, respectively.

Fig. 7a shows a schematic plane view of the SON membrane element 124, which is separated by the trench structure 126 from the semiconductor material of the SON substrate 120. As shown in Fig. 7a, the cantilever structure 180 comprises two cantilever arms 180-1, 180-2 formed from the semiconductor material of the SON membrane element 124. Moreover, the source contact 130-1, drain contact 130-2 and gate contact 130-3 are arranged on the respective portions of the cantilever structure 180, wherein the source, drain and gate contacts 130-1, 130-2, 130-3 are electrically isolated from each other.

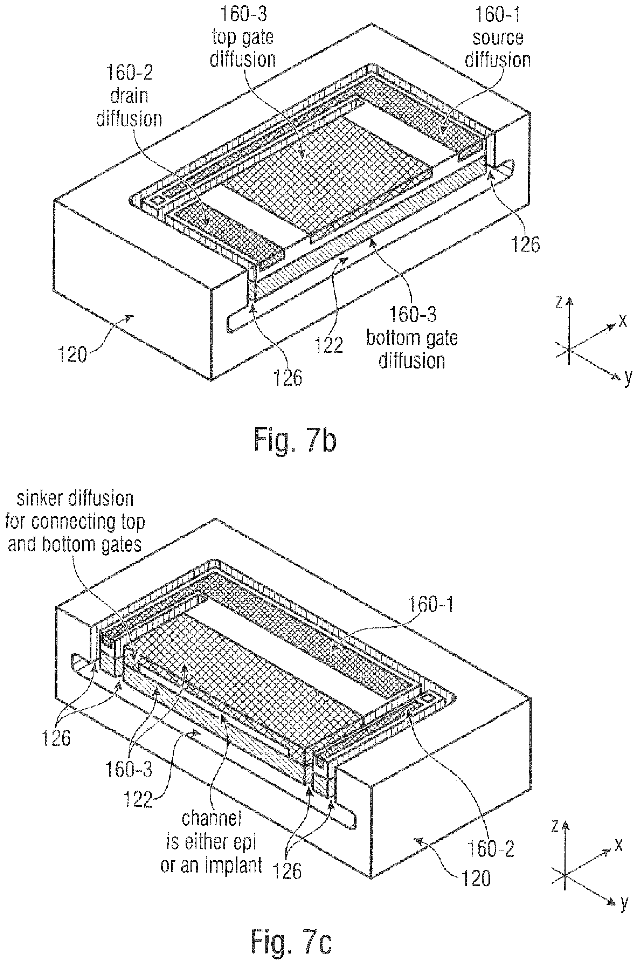

Figs. 7b-c show different top 3D partial cross-sectional views of the SON membrane element 120 and through the transistor structure 160 comprising the source, drain and gate region 160-1, 160-2, 160-3.

As shown in Figs. 7a-c, the contact positions for providing the electrical and mechanical connection of the transistor regions 160-1, 160-2, 160-3 with the contact structure in the capping structure 140 are location at the "free ends" of the cantilever arms 180-1, 180-2 for providing the mechanical coupling/bonding between the SON membrane element 124 and the capping structure 140 (lid) for bearing/supporting the SON membrane element 124 with respect to the SON substrate 120 of the temperature sensing device 100.

Thus, the cantilever structure 180 provides together with the SON cavity 122 a thermal and/or electrical insulation of the semiconductor material of the SON membrane element 124 from the semiconductor material of the surrounding SON substrate 120. Furthermore, the thermal and/or mechanical decoupling further provides a mechanical stress decoupling of the semiconductor material of the SON membrane element 124 from the surrounding semiconductor material of the SON substrate 120.

As shown in Fig. 7c, a sinker diffusion 160-5 may be provided for connecting the top and bottom portions of the gate regions 160-3. Moreover, the channel region 160-4 from the source region 160-1 to the drain region 160-2 and between the top and bottom portions of the gate region 160-3 may be formed by means of a epitaxial growth or a implantation process.

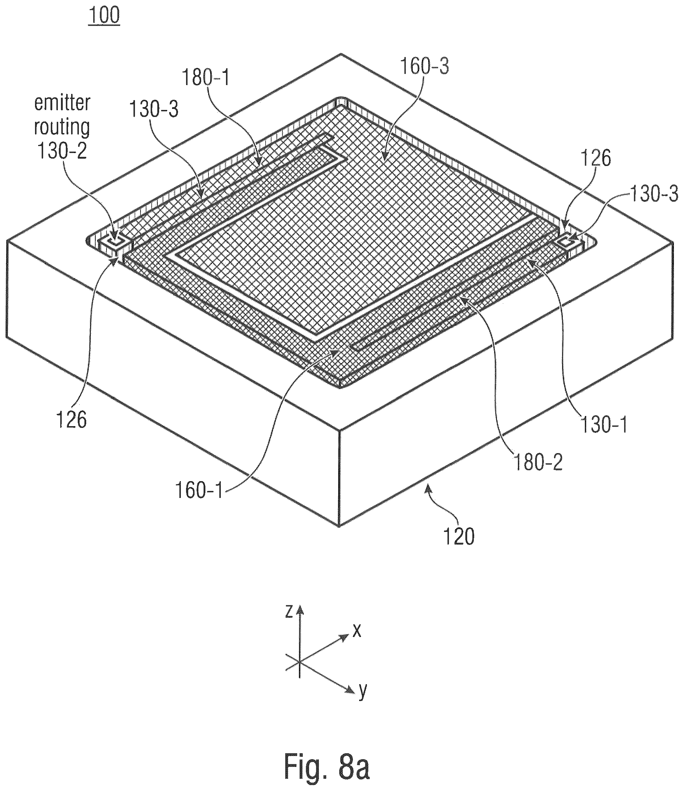

Figs. 8a-c show different 3D views of a folded JFET according to an embodiment. A folded JFET is a more compact version of a JFET, i.e. a folded JFET is wider, but has a shorter gate.

Fig. 8a shows a schematic top 3D plane view of a temperature sensing device 100 with a JFET 160 having a silicon cantilever suspension 180 according to an embodiment.

Figs. 8a-c now relate to the cantilever structure 180, which is configured to provide a mechanical coupling between the SON membrane element 124 and the capping structure 140 for bearing or supporting the SON membrane element 124 with respect to the SON substrate 120. As shown in Figs. 8a-c, the cantilever structure 180 may be formed by the semiconductor (e.g. silicon) material of the SON substrate 120 and the SON membrane element 124, respectively.

Fig. 8a shows a schematic plane view of the SON membrane element 124, which is separated by the trench structure 126 from the semiconductor material of the SON substrate 120. As shown in Fig. 8a, the cantilever structure 180 comprises two cantilever arms 180-1, 180-2 formed from the semiconductor material of the SON membrane element 124. Moreover, the source contact 130-1, drain contact 130-2 and gate contact 130-3 are arranged on the respective portions of the cantilever structure 180, wherein the source, drain and gate contacts 130-1, 130-2, 130-3 are electrically isolated from each other.

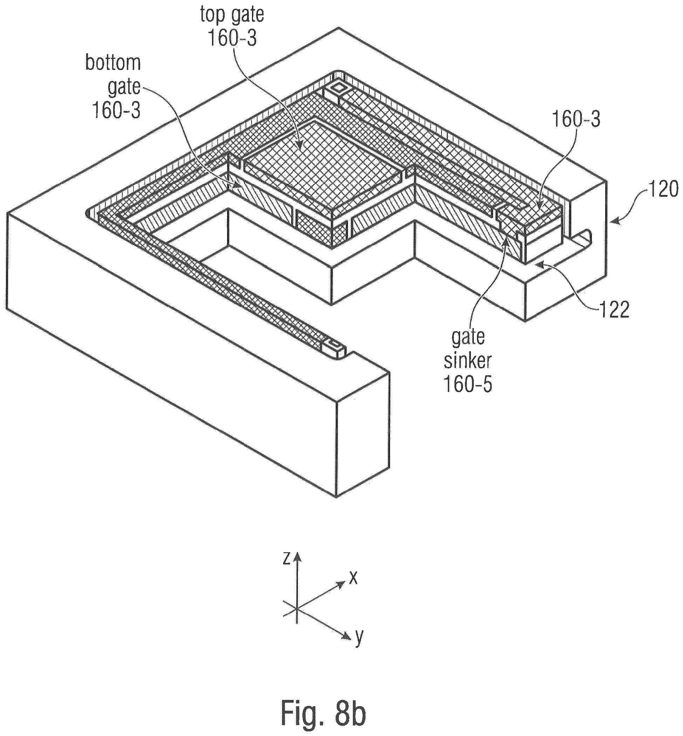

Figs. 8b-c show different top 3D partial cross-sectional views of the SON membrane element 120 and through the transistor structure 160 comprising the source, drain and gate region 160-1, 160-2, 160-3.

As shown in Figs. 8a-c, the contact positions for providing the electrical and mechanical connection of the transistor regions 160-1, 160-2, 160-3 with the contact structure in the capping structure 140 are location at the "free ends" of the cantilever arms 180-1, 180-2 for providing the mechanical coupling/bonding between the SON membrane element 124 and the capping structure 140 (lid) for bearing/supporting the SON membrane element 124 with respect to the SON substrate 120 of the temperature sensing device 100.

Thus, the cantilever structure 180 provides together with the SON cavity 122 a thermal and/or electrical insulation of the semiconductor material of the SON membrane element 124 from the semiconductor material of the surrounding SON substrate 120. Furthermore, the thermal and/or mechanical decoupling further provides a mechanical stress decoupling of the semiconductor material of the SON membrane element 124 from the surrounding semiconductor material of the SON substrate 120.

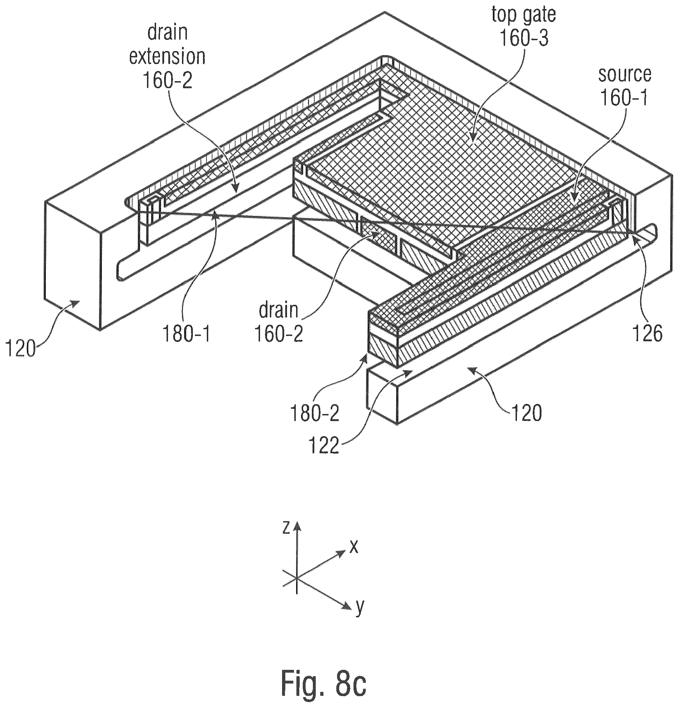

As shown in Fig. 8c, a sinker diffusion 160-5 may be provided for connecting the top and bottom portions of the gate regions 160-3. Moreover, the channel region from the source region 160-1 to the drain region 160-2 and between the top and bottom portions of the gate region 160-3 may be formed by means of a epitaxial growth or a implantation process.

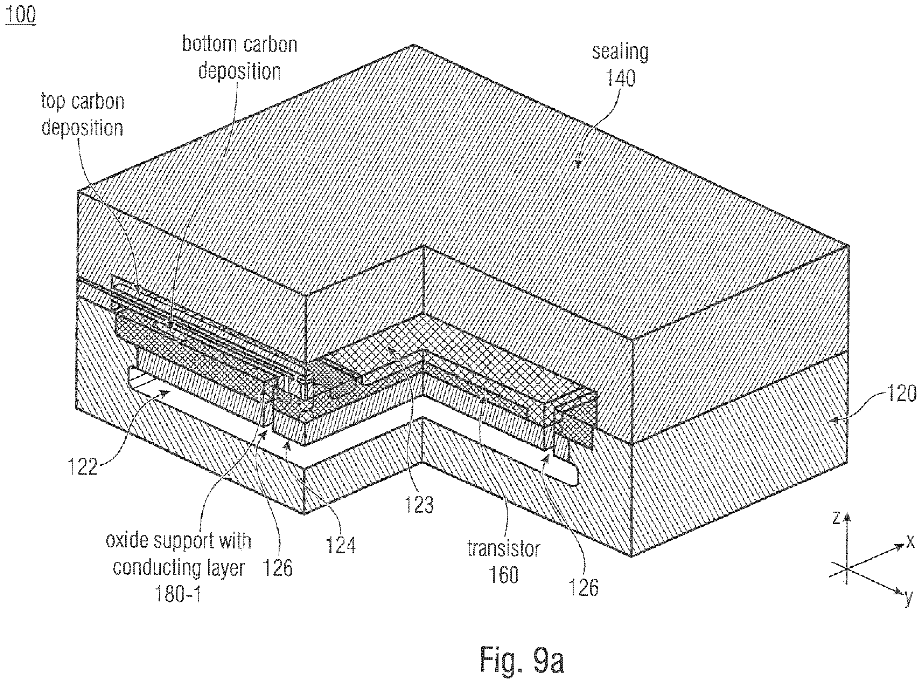

Figs. 9a-b show a schematic 3D cross-sectional view (partial view) of a temperature sensing device with a JFET 160 having an insulator (oxide) cantilever suspension according to an embodiment.

Figs. 9a-b show 3D cross-sectional views of the temperature sensing device 100 with the JFET 160 having an insulator (e.g. oxide) cantilever suspension 180 according to an embodiment.

Figs. 9a-b now relate to the cantilever structure 180, which is configured to provide a mechanical coupling between the SON membrane element 124 and the capping structure 140 for bearing or supporting the SON membrane element 124 with respect to the SON substrate 120. As shown in Figs. 9a-b, the cantilever structure 180 may be formed by the insulating (e.g. oxide) material of the capping substrate 140.

Fig. 9a-b show different top 3D partial cross-sectional views of the semiconductor device 100 and, especially, through the capping structure 140, the SON membrane element 120 and through the transistor structure 160 comprising the source, drain and gate region 160-1, 160-2, 160-3.

Fig. 9a shows a top 3D partial cross-sectional view of the capping structure 140, the SON membrane element 120 and through the transistor structure 160 comprising the source, drain and gate regions 160-1, 160-2, 160-3. The SON membrane element 124 is separated by the trench structure 126 from the semiconductor material of the SON substrate 120.

The capping (or lid) structure 140 for covering the SON membrane element 124 and for mechanically holding the SON membrane element 124 into position with respect to the SON substrate 120 comprises the second insulating material (e.g. oxide) 143. The capping structure 140 is provided for sealing the cavity 123 for the SON membrane element 124 and also the cavity 122 fluidically connected by the trench structure 126 to the cavity 123, wherein the SON membrane element 124 is suspended in the sealed cavity 123. The cantilever structure 180 comprises (at least one or) two cantilever arms 180-1, 180-2 formed from the insulating material of the capping structure 140.

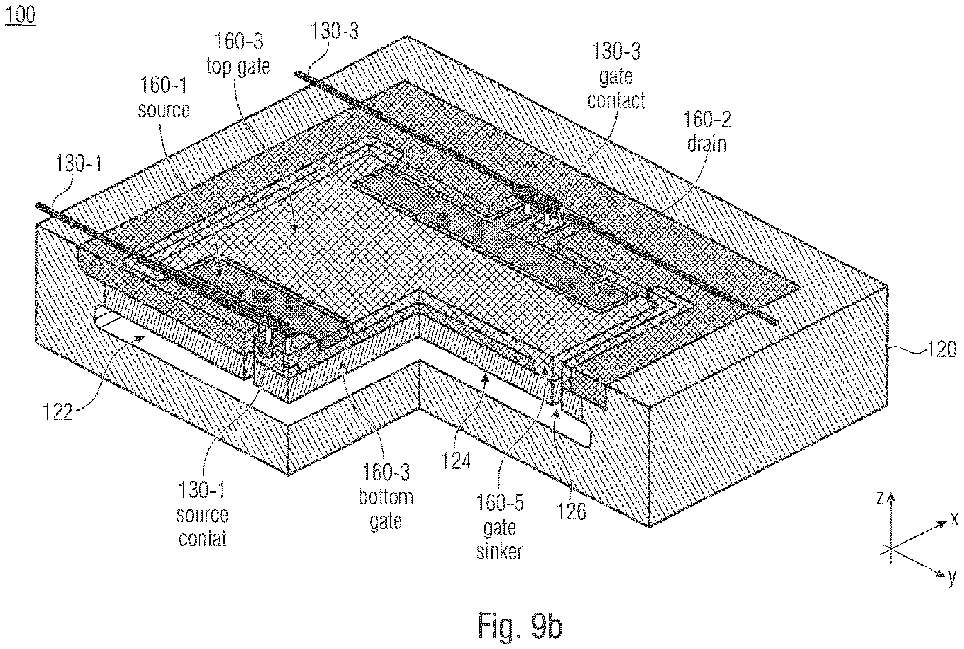

Fig. 9b shows a schematic 3D partial cross-sectional view of the SON membrane element 124, which is separated by the trench structure 126 from the semiconductor material of the SON substrate 120. Moreover, the source contact 130-1, drain contact 130-2 and gate contact 130-3 are arranged on the respective portions of the cantilever structure 180, wherein the source, drain and gate contacts 130-1 130-2, 130-3 are electrically isolated from each other.

As shown in Figs. 9b, the contact positions for providing the electrical and mechanical connection of the transistor regions 160-1, 160-2, 160-3 with the contact structure in the capping structure 140 are location at the "free ends" of the cantilever arms 180-1, 180-2 for providing the mechanical coupling/bonding between the SON membrane element 124 and the capping structure 140 (lid) for bearing/supporting the SON membrane element 124 with respect to the SON substrate 120 of the temperature sensing device 100.

Thus, the cantilever structure 180 provides together with the SON cavity 122 a thermal and/or electrical insulation of the semiconductor material of the SON membrane element 124 from the semiconductor material of the surrounding SON substrate 120. Furthermore, the thermal and/or mechanical decoupling further provides a mechanical stress decoupling of the semiconductor material of the SON membrane element 124 from the surrounding semiconductor material of the SON substrate 120.

Additional embodiments and aspects are described which may be used alone or in combination with the features and functionalities described herein.

An embodiment provides a temperature sensing device, comprising: a SON substrate (SON = silicon on nothing) having a SON cavity in a semiconductor material, wherein a SON membrane element is formed between a main surface region of the SON substrate and the SON cavity and is laterally bordered by a trench structure, a capping structure for covering the SON membrane element and for mechanically holding the SON membrane element into position with respect to the SON substrate, and a transistor structure integrated in the semiconductor material of the SON membrane element, the transistor structure having a first transistor region and a second transistor region both having a first doping type, and a third transistor region having a complimentary, second doping type, wherein the transistor structure is configured to provide during an operational condition a transistor output signal based on a temperature dependent, electrical parameter of the transistor structure, wherein a momentary temperature of the semiconductor material of the SON membrane element is derivable from the transistor output signal.

According to an aspect, the trench structure in the SON substrate provides a lateral confinement of the SON membrane element, and the cavity provides at least partially a confinement of the SON membrane element in the depth direction of the SON substrate.

According to another aspect, the temperature sensing device further comprises: a cantilever structure configured to provide a mechanical coupling between the SON substrate and the capping structure for bearing the SON membrane element.

According to another aspect, the cantilever structure is formed by the semiconductor (silicon) material of the SON substrate, or the cantilever structure is by the insulating (oxide) material of the capping structure.

According to another aspect, the capping structure is configured to provide a sealed cavity for the SON membrane element, wherein the membrane element is suspended in the sealed cavity.

According to another aspect, the transistor structure is formed as a bipolar junction transistor, wherein an emitter region forms the first transistor region, a collector region forms the third transistor region, and a basis region forms the third transistor region,

According to another aspect, the temperature sensitivity of the base-emitter diode of the bipolar junction transistor forms the temperature dependent, electrical parameter of the transistor structure.

According to another aspect, the bipolar junction transistor is part of a common emitter (CE) amplifier circuit with an active load or a resistive load.

According to another aspect, the transistor structure is formed as a junction field effect transistor (JFET) in the SON membrane element, wherein a source region forms the first transistor region comprises, wherein a drain region forms the second transistor region and wherein a gate region forms the third transistor region of the transistor structure.

According to another aspect, the transistor structure is formed as a folded junction field effect transistor.

According to another aspect, the temperature sensitivity of the channel region conductivity of the junction field effect transistor forms the temperature dependent, electrical parameter of the transistor structure.

According to another aspect, the junction field effect transistor is part of a common source (CS) amplifier circuit with an active load or a resistive load.

According to another aspect, the temperature sensing device further comprises: an optical filter element for an incident radiation at the capping structure in illumination direction upstream to the SON membrane element.

According to another aspect, the insulating material of the capping structure is at least partially configured to provide a matching layer for the radiation incident to the capping structure

Another embodiment provides a bolometer device comprising: the above temperature sensing device, and an evaluation circuit for deriving information on the momentary temperature of the semiconductor material of the SON membrane elements from the transistor output signal.

According to one aspect, the bolometer device further comprises: a plurality of temperature sensing devices, wherein the temperature sensing devices are arranged in an array, and wherein the evaluation circuit is configured for deriving the momentary temperature of the semiconductor material of the SON membrane elements based on the respective transistor output signal from the SON membrane elements.

According to another aspect, different types of optical filter elements for an incident radiation are arranged at the capping structure in illumination direction upstream to the SON membrane elements.

## Claims

1. Temperature sensing device (100), comprising:
a SON substrate (120) (SON = silicon on nothing) having a SON cavity (122) in a semiconductor material, wherein a SON membrane element (124) is formed between a main surface region (120-A) of the SON substrate (120) and the SON cavity (122) and is laterally bordered by a trench structure (126),
a capping structure (140) for covering the SON membrane element (124) and for mechanically holding the SON membrane element (124) into position with respect to the SON substrate (120),
a transistor structure (160) integrated in the semiconductor material of the SON membrane element, (124) the transistor structure (160) having a first transistor region (160-1) and a second transistor region (160-2) both having a first doping type, and a third transistor region (160-3) having a complimentary, second doping type, wherein the transistor structure (160) is configured to provide during an operational condition a transistor output signal (S_{OUT}) based on a temperature dependent, electrical parameter of the transistor structure (160), wherein a momentary temperature (T₀) of the semiconductor material of the SON membrane element (124) is derivable from the transistor output signal (Sₒᵤₜ), **characterized in that**: the capping structure (140) is configured to provide a sealed cavity (123) for the SON membrane element (124) between the capping structure (140) and the SON membrane element (124), wherein the membrane element (124) is suspended in the sealed cavity (123).

2. The temperature sensing device (100) according to claim 1, wherein the trench structure (126) in the SON substrate (120) provides a lateral confinement of the SON membrane element (124), and wherein the cavity (122) provides at least partially a confinement of the SON membrane element (124) in the depth direction of the SON substrate (120).

3. The temperature sensing device (100) according to any of the preceding claims, further comprising:
a cantilever structure (180) configured to provide a mechanical coupling between the SON substrate (120) and the capping structure (140) for bearing the SON membrane element (124).

4. The temperature sensing device (100) according to claim 3, wherein the cantilever structure (180) is formed by the semiconductor material of the SON substrate (120), or wherein the cantilever structure (180) is by the insulating material of the capping structure (140).

5. The temperature sensing device (100) according to any of the preceding claims, wherein the capping structure (140) is configured to provide the sealed cavity (123) as a hermetically sealed cavity (123) for the SON membrane element (124).

6. The temperature sensing device (100) according to any of the preceding claims, wherein the transistor structure (160) is formed as a bipolar junction transistor, wherein an emitter region forms the first transistor region (160-1), a collector region forms the third transistor region (160-2), and a basis region forms the third transistor region (160-3).

7. The temperature sensing device (100) according to claim 6, wherein the temperature sensitivity of the base-emitter diode of the bipolar junction transistor (160) forms the temperature dependent, electrical parameter of the transistor structure (160).

8. The temperature sensing device (100) according to claim 6 or 7, wherein the bipolar junction transistor (160) is part of a common emitter (CE) amplifier circuit with an active load or a resistive load.

9. The temperature sensing device (100) according to any of the preceding claims 1 to 5, wherein the transistor structure (160) is formed as a junction field effect transistor (JFET) in the SON membrane element (124), wherein a source region forms the first transistor region (160-1), wherein a drain region forms the second transistor region (160-2) and wherein a gate region forms the third transistor region (160-3) of the transistor structure (160).

10. The temperature sensing device (100) according to claim 9, wherein the transistor structure (160) is formed as a folded junction field effect transistor.

11. The temperature sensing device (100) according to claim 9 or 10, wherein the temperature sensitivity of the channel region (160-4) conductivity of the junction field effect transistor (160) forms the temperature dependent, electrical parameter of the transistor structure (160).

12. The temperature sensing device (100) according to any of claims 9 to 11, wherein the junction field effect transistor (160) is part of a common source (CS) amplifier circuit with an active load or a resistive load.

13. The temperature sensing device (100) according to any of the preceding claims, further comprising:
An optical filter element (190) for an incident radiation (R) at the capping structure (140) in illumination direction upstream to the SON membrane element (124).

14. The temperature sensing device (100) according to claim 13, wherein the insulating material of the capping structure (140) is at least partially configured to provide a matching layer (192) for the radiation (R) incident to the capping structure (140).

15. A bolometer device (200) comprising:
The temperature sensing device (100) according to any of the preceding claims, and
an evaluation circuit (210) for deriving an information on the momentary temperature of the semiconductor material of the SON membrane element (124) from the transistor output signal (S_{OUT}).

16. The bolometer device (200) according to claim 15, further comprising:
A plurality of temperature sensing devices (200), wherein the temperature sensing devices (100) are arranged in an array, and
Wherein the evaluation circuit (210) is configured for deriving the momentary temperature of the semiconductor material of the SON membrane elements (124) based on the respective transistor output signal (S_{OUT}) on the SON membrane elements (124).

17. The bolometer device (200) according to claim 15 or 16, wherein different types of optical filter elements (190) for an incident radiation (R) are arranged at the capping structure (140) in illumination direction upstream to the SON membrane elements (124).

## Patentansprüche

1. Temperaturerfassungsvorrichtung (100), die folgende Merkmale aufweist:
ein SON-Substrat (120) (SON = Silicon on nothing) mit einem SON-Hohlraum (122) in einem Halbleitermaterial, wobei ein SON-Membranelement (124) zwischen einer Hauptoberflächenregion (120-A) des SON-Substrats (120) und dem SON-Hohlraum (122) gebildet ist und seitlich durch eine Grabenstruktur (126) begrenzt ist,
eine Abdeckungsstruktur (140) zum Bedecken des SON-Membranelements (124) und zum mechanischen Halten des SON-Membranelements (124) in Position in Bezug auf das SON-Substrat (120),
eine Transistorstruktur (160), die in das Halbleitermaterial des SON-Membranelements integriert ist (124), wobei die Transistorstruktur (160) eine erste Transistorregion (160-1) und eine zweite Transistorregion (160-2), die beide einen ersten Dotiertyp aufweisen, und eine dritte Transistorregion (160-3) aufweist, die einen komplementären zweiten Dotiertyp aufweist,
wobei die Transistorstruktur (160) konfiguriert ist, basierend auf einem temperaturabhängigen elektrischen Parameter der Transistorstruktur (160) während einer Betriebsbedingung ein Transistorausgangssignal (S_{OUT}) bereitzustellen, wobei eine aktuelle Temperatur (T₀) des Halbleitermaterials des SON-Membranelements (124) von dem Transistorausgangssignal (Sₒᵤₜ) abgeleitet werden kann,
**dadurch gekennzeichnet, dass** die Abdeckungsstruktur (140) konfiguriert ist, einen abgedichteten Hohlraum (123) für das SON-Membranelement (124) zwischen der Abdeckungsstruktur (140) und dem SON-Membranelement (124) bereitzustellen, wobei das Membranelement (124) in dem abgedichteten Hohlraum (123) aufgehängt ist.

2. Die Temperaturerfassungsvorrichtung (100) gemäß Anspruch 1, bei der die Grabenstruktur (126) in dem SON-Substrat (120) eine seitliche Begrenzung des SON-Membranelements (124) bereitstellt, und wobei der Hohlraum (122) zumindest teilweise eine Begrenzung des SON-Membranelements (124) in der Tiefenrichtung des SON-Substrats (120) bereitstellt.

3. Die Temperaturerfassungsvorrichtung (100) gemäß einem der vorhergehenden Ansprüche, die ferner folgende Merkmale aufweist:
eine Auslegerstruktur (180), die konfiguriert ist, eine mechanische Kopplung zwischen dem SON-Substrat (120) und der Abdeckungsstruktur (140) zum Tragen des SON-Membranelements (124) bereitzustellen.

4. Die Temperaturerfassungsvorrichtung (100) gemäß Anspruch 3, bei der die Auslegerstruktur (180) durch das Halbleitermaterial des SON-Substrats (120) gebildet ist oder bei der die Auslegerstruktur (180) aus dem isolierenden Material der Abdeckungsstruktur (140) gebildet ist.

5. Die Temperaturerfassungsvorrichtung (100) gemäß einem der vorhergehenden Ansprüche, bei der die Abdeckungsstruktur (140) konfiguriert ist, den abgedichteten Hohlraum (123) als einen hermetisch abgedichteten Hohlraum (123) für das SON-Membranelement (124) bereitzustellen.

6. Die Temperaturerfassungsvorrichtung (100) gemäß einem der vorhergehenden Ansprüche, bei die Transistorstruktur (160) als Bipolartransistor gebildet ist, wobei eine Emitterregion die erste Transistorregion (160-1) bildet, eine Kollektorregion die dritte Transistorregion (160-2) bildet und eine Basisregion die dritte Transistorregion (160-3) bildet.

7. Die Temperaturerfassungsvorrichtung (100) gemäß Anspruch 6, bei der die Temperaturempfindlichkeit der Basis-Emitter-Diode des Bipolartransistors den temperaturabhängigen elektrischen Parameter der Transistorstruktur (160) bildet.

8. Die Temperaturerfassungsvorrichtung (100) gemäß Anspruch 6 oder 7, bei der der Bipolartransistor (160) Teil einer Emitter(CE; CE = Common Emitter)-Verstärkerschaltung mit einer Wirklast oder einer Widerstandslast ist.

9. Die Temperaturerfassungsvorrichtung (100) gemäß einem der vorhergehenden Ansprüche 1 bis 5, bei der die Transistorstruktur (160) als ein Sperrschicht-Feldeffekttransistor (JFET) in dem SON-Membranelement (124) gebildet ist, wobei eine Sourceregion die erste Transistorregion (160-1) bildet, wobei eine Drainregion die zweite Transistorregion (160-2) bildet und wobei eine Gateregion die dritte Transistorregion (160-3) der Transistorstruktur (160) bildet.

10. Die Temperaturerfassungsvorrichtung (100) gemäß Anspruch 9, bei der die Transistorstruktur (160) als ein Feldeffekttransistor mit gefalteter Sperrschicht gebildet ist.

11. Die Temperaturerfassungsvorrichtung (100) gemäß Anspruch 9 oder 10, bei der die Temperaturempfindlichkeit der Leitfähigkeit der Kanalregion (160-4) des Sperrschicht-Feldeffekttransistors (160) die temperaturabhängigen elektrischen Parameter der Transistorstruktur (160) bildet.

12. Die Temperaturerfassungsvorrichtung (100) gemäß einem der Ansprüche 9 bis 11, bei der der Sperrschicht-Feldeffekttransistor (160) Teil einer Source(CS; CS = Common Source)-Verstärkerschaltung mit einer Wirklast oder einer Widerstandslast ist.

13. Die Temperaturerfassungsvorrichtung (100) gemäß einem der vorhergehenden Ansprüche, die ferner folgendes Merkmal aufweist:
ein optisches Filterelement (190) für eine einfallende Strahlung (R) an der Abdeckungsstruktur (140) in Beleuchtungsrichtung stromaufwärts zu dem SON-Membranelement (124).

14. Die Temperaturerfassungsvorrichtung (100) gemäß Anspruch 13, bei der das isolierende Material der Abdeckungsstruktur (140) zumindest teilweise konfiguriert ist, eine Anpassungsschicht (192) für die Strahlung (R) bereitzustellen, die auf die Abdeckungsstruktur (140) auftrifft.

15. Eine Bolometervorrichtung (200), die folgende Merkmale aufweist:
die Temperaturerfassungsvorrichtung (100) gemäß einem der vorhergehenden Ansprüche, und
eine Auswertungsschaltung (210) zum Ableiten von Informationen über die aktuelle Temperatur des Halbleitermaterials des SON-Membranelements (124) von dem Transistorausgangssignal (S_{OUT}).

16. Die Bolometervorrichtung (200) gemäß Anspruch 15, die ferner folgende Merkmale aufweist:
eine Mehrzahl von Temperaturerfassungsvorrichtungen (200), wobei die Temperaturerfassungsvorrichtungen (100) in einem Array angeordnet sind und
wobei die Auswertungsschaltung (210) konfiguriert ist zum Ableiten der aktuellen Temperatur des Halbleitermaterials des SON-Membranelements (124) basierend auf dem jeweiligen Transistorausgangssignal (S_{OUT}) an den SON-Membranelementen (124).

17. Die Bolometervorrichtung (200) gemäß Anspruch 15 oder 16, wobei unterschiedliche Typen von optischen Filterelementen (190) für eine einfallende Strahlung (R) an der Abdeckungsstruktur (140) in der Beleuchtungsrichtung stromaufwärts zu den SON-Membranelementen (124) angeordnet sind.

## Revendications

1. Dispositif (100) de détection de température, comprenant :
un substrat (120) SON (SON = silicium sur rien) ayant une cavité (122) SON dans un matériau semi-conducteur, dans lequel un élément (124) SON à membrane est formé entre une région (120-A) de surface principale du substrat (120) SON et la cavité (122) SON et est bordé latéralement par une structure (126) en sillon,
une structure (140) de chapeautage pour recouvrir l'élément (124) SON à membrane et pour maintenir mécaniquement l'élément (124) SON à membrane en position par rapport au substrat (120) SON,
une structure (160) à transistor intégrée dans le matériau semi-conducteur de l'élément (124) SON à membrane, la structure (160) à transistor ayant une première région (160-1) à transistor et une deuxième région (160-2) à transistor ayant toutes deux un premier type de dopage, et une troisième région (160-3) à transistor ayant un deuxième type de dopage, complémentaire, dans lequel la structure (160) à transistor est configurée pour donner pendant un état opérationnel un signal (S_{OUT}) de sortie de transistor sur la base d'un paramètre électrique, qui dépend de la température, de la structure (160) à transistor, dans lequel une température (T₀) instantanée du matériau semi-conducteur de l'élément (124) SON à membrane peut se déduire du signal (S_{OUT}) de sortie de transistor, **caractérisé en ce que** : la structure (140) de chapeautage est configurée pour donner une cavité (123) scellée pour l'élément (124) SON à membrane entre la structure (140) de chapeautage et l'élément (124) SON à membrane, dans lequel l'élément (124) à membrane est suspendu dans la cavité (123) scellée.

2. Dispositif (100) de détection de température suivant la revendication 1, dans lequel la structure (126) en sillon dans le substrat (120) SON donne un confinement latéral de l'élément (124) SON à membrane et dans lequel la cavité (122) donne au moins en partie un confinement de l'élément (124) SON à membrane dans la direction de la profondeur du substrat (120) SON.

3. Dispositif (100) de détection de température suivant l'une quelconque des revendications précédentes, comprenant en outre :
une structure (180) en porte-à-faux configurée pour donner un accouplement mécanique entre le substrat (120) SON et la structure (140) de chapeautage pour porter l'élément (124) SON à membrane.

4. Dispositif (100) de détection de température suivant la revendication 3, dans lequel la structure (180) en porte-à-faux est formée par le matériau semi-conducteur du substrat (120) SON ou dans lequel la structure (180) en porte-à-faux est formée par le matériau isolant de la structure (140) de chapeautage.

5. Dispositif (100) de détection de température suivant l'une quelconque des revendications précédentes, dans lequel la structure (140) de chapeautage est configurée pour donner la cavité (123) scellée sous la forme d'une cavité (123) scellée hermétiquement pour l'élément (124) SON à membrane.

6. Dispositif (100) de détection de température suivant l'une quelconque des revendications précédentes, dans lequel la structure (160) à transistor est formée en transistor à jonction bipolaire, dans lequel une région d'émetteur forme la première région de transistor (160-1), une région de collecteur forme la deuxième région (160-2) et une région de base forme la troisième région (160-3) de transistor.

7. Dispositif (100) de détection de température suivant la revendication 6, dans lequel la sensibilité à la température de la diode base-émetteur du transistor (160) à jonction bipolaire forme le paramètre électrique, qui dépend de la température, de la structure (160) à transistor.

8. Dispositif (100) de détection de température suivant la revendication 6 ou 7, dans lequel le transistor (160) à jonction bipolaire est une partie d'un circuit amplificateur à émetteur (CE) commun ayant une charge active et une charge résistive.

9. Dispositif (100) de détection de température suivant l'une quelconque des revendications 1 à 5 précédentes, dans lequel la structure (160) à transistor est formée en transistor (JFET) à jonction et à effet de champ dans l'élément (124) SON à membrane, dans lequel une région de source forme la première région (160-1) de transistor, dans lequel une région de drain forme la deuxième région (160-2) de transistor et dans lequel une région de grille forme la troisième région (160-3) de transistor de la structure (160) à transistor.

10. Dispositif (100) de détection de température suivant la revendication 9, dans lequel la structure (160) à transistor est formée en transistor à jonction et à effet de champ plié.

11. Dispositif (100) de détection de température suivant la revendication 9 ou 10, dans lequel la sensibilité à la température de la conductivité de la région (160-4) de canal du transistor (160) à jonction et à effet de champ forme le paramètre électrique, qui dépend de la température, de la structure (160) à transistor.

12. Dispositif (100) de détection de température suivant l'une quelconque des revendications 9 à 11, dans lequel le transistor (160) à jonction et à effet de champ est une partie d'un circuit amplificateur à source (CS) commune ayant une charge active ou une charge résistive.

13. Dispositif (100) de détection de température suivant l'une quelconque des revendications précédentes, comprenant en outre :
un élément (190) de filtre optique pour un rayonnement (R) incident sur la structure (140) de chapeautage dans une direction d'éclairage en amont l'élément (124) SON à membrane.

14. Dispositif (100) de détection de température suivant la revendication 13, dans lequel le matériau isolant de la structure (140) de chapeautage est configuré au moins en partie pour donner une couche (192) d'adaptation pour le rayonnement (R) incident sur la structure (140) de chapeautage.

15. Dispositif (200) de bolomètre, comprenant :
le dispositif (100) de détection de température suivant l'une quelconque des revendications précédentes et
un circuit (210) d'évaluation pour déduire une information sur la température instantanée du matériau semi-conducteur de l'élément (124) SON à membrane à partir du signal (S_{OUT}) de sortie de transistor.

16. Dispositif (200) de bolomètre suivant la revendication 15, comprenant en outre :
une pluralité de dispositifs (100) de détection de température, dans lequel les dispositifs (100) de détection de température sont disposés suivant un réseau, et
le circuit (210) d'évaluation est configuré pour déduire la température instantanée du matériau semi-conducteur des éléments (124) SON à membrane sur la base du signal (S_{OUT}) de sortie de transistor respectif des éléments (124) SON à membrane.

17. Dispositif (200) de bolomètre suivant la revendication 15 ou 16, dans lequel des types différents d'éléments de filtre optique d'un rayonnement (R) incident sont disposés sur la structure (140) de chapeautage dans une direction d'éclairage en amont des éléments (124) SON à membrane.
